# EUROPÄISCHE PATENTSCHRIFT

(11) **EP 4 466 745 B1**
(45) Veröffentlichungstag und Bekanntmachung des Hinweises auf die Patenterteilung: **18.02.2026**
(21) Anmeldenummer: 23725121.0
(22) Anmeldetag: 03.05.2023
(51) Int. Cl.: H01M 8/2404, H01M 10/04

(54) **INSPEKTION BEI DER HERSTELLUNG VON MODULEN ODER VORSTUFEN VON MODULEN**
INSPECTION PROCESS IN THE PRODUCTION OF MODULES OR PRECURSORS OF MODULES
PROCÉDÉ D'INSPECTION DANS LA PRODUCTION DE MODULES OU DE PRÉCURSEURS DE MODULES

(30) Priorität: 12.05.2022 DE 102022111907
(43) Veröffentlichungstag der Anmeldung: 27.11.2024
(73) Patentinhaber: MB Automation GmbH & Co. KG, 93426 Roding (DE)
(72) Erfinder: VASKO, Ondrej, 92421 Schwandorf (DE); MAYER, Jessica, 92542 Dieterskirchen (DE)
(74) Vertreter: Schmidt, Steffen J.
(86) Internationale Anmeldenummer: PCT/EP2023/061603
(87) Internationale Veröffentlichungsnummer: WO 2023/217596

(56) Entgegenhaltungen:
- EP-A1- 2 696 422
- JP-A- 2016 197 526
- KR-A- 20210 045 181

## Beschreibung

### Hintergrund

Hier wird eine Inspektion bei der Herstellung von Modulen oder Vorstufen von Modulen offenbart. Diese Module oder deren Vorstufen können zum Beispiel Lagenmaterial enthaltende Schichtanordnungen, Anordnungen für Brennstoff- oder Batterie-Zellen, oder Teile zu deren Herstellung sein. Diese Inspektion ist als Verfahren und als Vorrichtung offenbart. Details dazu definieren die Ansprüche. Auch die Beschreibung enthält relevante Angaben zur Struktur und Funktionsweise der Inspektion sowie zu Vorrichtungs- und Verfahrens-Varianten.

### Stand der Technik

Die WO 2021 171 946 A1 betrifft eine Prüfvorrichtung zum Prüfen der Position der Elektrodenlage in einem Laminat, in dem eine Trennfolie und eine Elektrodenlage durch einen Klebstoff gebunden sind, von der Trennfolienseite aus. Eine Infrarot-Bestrahlungseinheit bestrahlt das Laminat von der Trennfolienseite aus mit Infrarotlicht. Eine für Infrarotlicht empfindliche Kamera nimmt das durch die Trennfolie hindurchgelassene und von der Elektrodenlage reflektierte Infrarotlicht auf. Eine Erfassungseinheit erfasst die Position der Elektrodenlage auf der Grundlage des von der Kamera aufgenommenen Bildes. Auf einem Stapeltisch werden Laminatstapel aus Trennfolien und Elektrodenlage gestapelt. Eine Transporteinheit dient zum Transportieren der Trennfolien und Elektrodenlage und zum Ablegen auf dem Stapeltisch. Die Prüfvorrichtung prüft die Position der Elektrodenlage in den von der Transporteinheit freigegebenen Laminatstapel.

Bei anderen bekannten Lösungen wird die fertige Batteriezelle, und in Vorstufen der Elektrodenstapel, auf elektrischen Kurzschluss getestet. Dieses Vorgehen führt zu einem hohen Anteil unbrauchbarer (Zwischen- und End-) Produkte, da auch nicht präzise gefertigte Elektrodenstapel laminiert und dann zur unzureichenden Batteriezelle end-verarbeitet werden.

Das Dokument EP 2 696 422 A1 offenbart eine Inspektionsvorrichtung für Lagenstapel. Zur Inspektion der Lagenstapel weist die Vorrichtung vier Kamerasensoren auf, die vertikal über einem zu inspizierenden Lagenstapel positioniert sind.

Weiter offenbaren die Dokumente KR 2021 0045 181 A und JP 2016 197 526 A jeweils Inspektionsvorrichtungen für Lagenstapel, die mit oberhalb der zu inspizierenden Lagenstapel positionierten Sensoren die Positionierung der gestapelten Lagen überprüfen.

### Technisches Problem

Ausgehend hiervon soll eine Anordnung und eine Vorgehensweise bereitgestellt werden, die erlaubt, mit hoher Verarbeitungsgeschwindigkeit Module oder Vorstufen von Modulen, zum Beispiel Lagenmaterial enthaltende Brennstoff- oder Batterie-Zellen, mit hoher Präzision zu fertigen, deren Kurzschlussrisiko zu verringern und deren Wirkungsgrad zu verbessern.

### Technische Lösung

Die Erfindung ist durch die unabhängigen Ansprüche definiert. Vorteilhafte Ausgestaltungen der Erfindung sind durch die abhängigen Ansprüche definiert.

Ein Beispiel für ein Inspektionsverfahren bei der Herstellung von Modulen oder Vorstufen von Modulen umfasst, zum Beispiel in folgender Reihenfolge, die Schritte:
Bereitstellen einer vereinzelten Anoden- und/oder Kathoden-Lage an einer Aufnehmstelle; Fördern einer Stapelvorrichtung zu der Aufnehmstelle; Aufnehmen der Anoden-/Kathoden-Lage von der Aufnehmstelle durch die Stapelvorrichtung; Erfassen von Position und/oder Orientierung der Anoden-/Kathoden-Lage; Transportieren der Anoden-/Kathoden-Lage zu einer Stapelstelle durch die Stapelvorrichtung; Ausrichten der Stapelvorrichtung mit der transportierten Anoden-/Kathoden-Lage relativ zur Stapelstelle; und Abstapeln der transportierten Anoden-/Kathoden-Lage an der Stapelstelle.

In Varianten des Inspektionsverfahrens erfolgt das Erfassen von Position und/oder Orientierung der Anoden-/Kathoden-Lage vor dem Aufnehmen der Anoden-/Kathoden-Lage durch die Stapelvorrichtung von der Aufnehmstelle und/oder während des Transportierens der Anoden-/Kathoden-Lage durch die Stapelvorrichtung zu der Stapelstelle. In Varianten des Inspektionsverfahrens erfolgt das Erfassen von Position und/oder Orientierung der Anoden-/Kathoden-Lage während des Transportierens der Anoden-/Kathoden-Lage durch die Stapelvorrichtung zu der Stapelstelle mittels einer ersten Kamera, und/oder vor dem Aufnehmen der Anoden-/Kathoden-Lage durch die Stapelvorrichtung von der Aufnehmstelle mittels einer zweiten Kamera.

Um die genaue Positionierung zu gewährleisten, wird in einer Variante zunächst eine vorläufige Position auf dem Transport der ankommenden Anoden-/Kathoden-Lagen mit Hilfe von jeweils einer Matrixkamera und einer Beleuchtungseinrichtung (weiß, einstellbar 0-20°) überprüft.

In Varianten des Inspektionsverfahrens erfassen die erste und/oder die zweite Kamera in senkrechter, ± etwa 25°, - Draufsicht auf die Anoden-/Kathoden-Lage deren Position und/ oder Orientierung. In Varianten des Inspektionsverfahrens erhellen eine der ersten und/oder der zweiten Kamera zugeordnete Weißlichtquelle die Anoden-/Kathoden-Lage für einen Bildeinzug durch die erste bzw. zweite Kamera. In Varianten des Inspektionsverfahrens erfassen die erste und/oder die zweite Kamera mit einem (einzigen) Bildeinzug die Anoden-/Kathoden-Lage vollständig, um deren Position und/oder Orientierung zu erfassen. In Varianten des Inspektionsverfahrens erfassen die erste und/oder die zweite Kamera mit einem einzigen Bildeinzug einen Bereich, wenigstens einen Eckbereich, zwei diagonale Eckbereiche, und/oder wenigstens einen Eckbereich und zumindest einen Abschnitt einer Kante der Anoden-/Kathoden-Lage, um die Position und/oder Orientierung der Anoden-/Kathoden-Lage zu erfassen. In Varianten des Inspektionsverfahrens werden die erste und/oder die zweite Kamera als Zeilenkamera ausgestaltet, die die Position und/oder Orientierung der Anoden-/Kathoden-Lage vor dem Aufnehmen durch die Stapelvorrichtung bzw. bei ihrem Eintreffen an der Aufnehmstelle oder auf dem Weg zu der Aufnehmstelle erfassen.

In Varianten des Inspektionsverfahrens werden der ersten und/oder der zweiten Kamera wenigstens ein optisch wirksames Element vorgeschaltet, um an einer oder mehreren Stellen oder Bereichen die Position und/oder Orientierung der Anoden-/Kathoden-Lage vor dem Aufnehmen durch die Stapelvorrichtung bzw. bei ihrem Eintreffen an der Aufnehmstelle oder auf dem Weg zu der Aufnehmstelle zu erfassen.

In Varianten des Inspektionsverfahrens werden Korrekturwerte ermittelt aus der Position und/oder Orientierung der Anoden-/Kathoden-Lage vor deren Aufnehmen durch die Stapelvorrichtung, der Position und/oder Orientierung der Stapelvorrichtung, und/oder der Position und/oder Orientierung der aufgenommenen einzelnen Anoden-/Kathoden-Lage während eines Transportierens der Anoden-/Kathoden-Lage zu der Stapelstelle. In Varianten des Inspektionsverfahrens werden diese Korrekturwerte beim Ausrichten der Stapelvorrichtung mit der transportierten Anoden-/Kathoden-Lage relativ zur Stapelstelle berücksichtigt. In Varianten des Inspektionsverfahrens werden diese Korrekturwerte beim Ausrichten der Stapelvorrichtung für das Aufnehmen der Anoden-/Kathoden-Lage durch die Stapelvorrichtung derart berücksichtigt, dass die Anoden-/Kathoden-Lage in einer mittigen Null-Position und/oder fluchtend ausgerichtet von der Stapelvorrichtung aufgenommen wird.

Bei dem Inspektionsverfahren kann, in einer Variante, mit den berechneten Korrekturwerten die Stapelvorrichtung relativ zur Anoden-/Kathoden-Lage vor/bei deren Aufnehmen so positioniert werden, dass die Anoden-/Kathoden-Lage von der Stapelvorrichtung in einer Nullstellung positioniert aufgenommen wird. Dazu kann die Stapelvorrichtung in ihrer Position und/ oder Orientierung zur Anoden-/Kathoden-Lage an der Aufnehmstelle korrigiert werden.

Gleichermaßen kann nach dem Aufnehmen während des Transports entsprechend der Korrekturwerten aus dem Bildeinzug die Stapelvorrichtung so positioniert werden, so dass die Anoden-/Kathoden-Lage von der Stapelvorrichtung beim Ablegen an der Stapelstelle auf dem dort befindlichen Elektrodenstapel die Anoden-/Kathoden-Lage passend und mit minimaler oder keiner weiteren Korrekturbewegung abgelegt wird.

Dieses Verfahren ist sehr schnell und mit hoher Präzision ausführbar. Zum Ausführen dieses Verfahrens ist zum Beispiel eine nachstehend erläuterte Vorrichtung geeignet.

Ein Beispiel für eine Vorrichtung zum Fördern und Inspizieren von Modulen oder Vorstufen von Modulen umfasst: eine Stapelvorrichtung, bestimmt und eingerichtet zum Aufnehmen einer vereinzelten Anoden-/Kathoden-Lage an einer Aufnehmstelle; eine Fördereinrichtung, bestimmt und eingerichtet zum Fördern der Stapelvorrichtung zu der Aufnehmstelle hin und von der Aufnehmstelle weg; eine erste Kamera, bestimmt und eingerichtet zum Erfassen von Position und/ oder Orientierung der Anoden-/Kathoden-Lage auf deren Weg von der Aufnehmstelle zur Stapelstelle; eine Stell-Einrichtung, umfassend wenigstens einen Stellantrieb, bestimmt und eingerichtet zum Betätigen der Stapelvorrichtung zum Aufnehmen der Anoden-/Kathoden-Lage, und/oder zum Ausrichten der Stapelvorrichtung mit der Anoden-/Kathoden-Lage relativ zur Stapelstelle während des Transportierens der Anoden-/Kathoden-Lage zur Stapelstelle, und/oder zum Abstapeln der Anoden-/Kathoden-Lage an der Stapelstelle.

In Varianten der Vorrichtung ist eine erste Kamera dazu bestimmt und eingerichtet, Position und/oder Orientierung der Anoden-/Kathoden-Lage während des Transportierens der Anoden-/Kathoden-Lage durch die Stapelvorrichtung zu der Stapelstelle zu erfassen. In Varianten der Vorrichtung ist eine zweite Kamera dazu bestimmt und eingerichtet, Position und/ oder Orientierung der Anoden-/Kathoden-Lage vor dem Aufnehmen der Anoden-/Kathoden-Lage durch die Stapelvorrichtung von der Aufnehmstelle zu erfassen.

In Varianten der Vorrichtung sind die erste und/oder die zweite Kamera dazu bestimmt und eingerichtet, in senkrechter, ± etwa 25°, - Draufsicht auf die Anoden-/Kathoden-Lage deren Position und/oder Orientierung zu erfassen. In Varianten der Vorrichtung sind eine der ersten und/oder der zweiten Kamera zugeordnete Weißlichtquelle dazu bestimmt und eingerichtet, die Anoden-/Kathoden-Lage für einen Bildeinzug durch die erste bzw. zweite Kamera zu erhellen. In Varianten der Vorrichtung sind die erste und/oder die zweite Kamera dazu bestimmt und eingerichtet, mit einem (einzigen) Bildeinzug die Anoden-/Kathoden-Lage vollständig zu erfassen, um deren Position und/oder Orientierung zu erfassen. In Varianten der Vorrichtung sind die erste und/oder die zweite Kamera dazu bestimmt und eingerichtet, mit einem einzigen Bildeinzug einen Bereich, wenigstens einen Eckbereich, zwei diagonale Eckbereiche, und/oder wenigstens einen Eckbereich und zumindest einen Abschnitt einer Kante der Anoden-/Kathoden-Lage zu erfassen, um die Position und/oder Orientierung der Anoden-/Kathoden-Lage zu erfassen. In Varianten der Vorrichtung sind die erste und/oder die zweite Kamera als Zeilenkamera ausgestaltet, die dazu bestimmt und eingerichtet sind, die Position und/oder Orientierung der Anoden-/Kathoden-Lage vor dem Aufnehmen durch die Stapelvorrichtung bzw. bei ihrem Eintreffen an der Aufnehmstelle oder auf dem Weg zu der Aufnehmstelle zu erfassen.

In Varianten der Vorrichtung sind der ersten und/oder der zweiten Kamera wenigstens ein optisch wirksames Element vorgeschaltet, dazu bestimmt und eingerichtet, um an einer oder mehreren Stellen oder Bereichen die Position und/oder Orientierung der Anoden-/Kathoden-Lage vor dem Aufnehmen durch die Stapelvorrichtung bzw. bei ihrem Eintreffen an der Aufnehmstelle oder auf dem Weg zu der Aufnehmstelle zu erfassen. In Varianten der Vorrichtung sind das wenigstens eine optisch wirksame Element als eine Linse, oder Linsenanordnung, ein Spiegel oder eine Spiegelanordnung, ein Prisma oder eine Prismenanordnung, ein Flächen-Licht ein koaxiales Ring-Licht, ein Dunkelfeld-Licht, oder Kombinationen hiervon.

In Varianten der Vorrichtung ist eine Steuereinheit dazu bestimmt und eingerichtet, aus dem Bildeinzug und/oder Daten aus der Erfassungseinrichtung und/oder der ersten und/oder der zweiten Kamera Korrekturwerte zu ermitteln aus der Position und/oder Orientierung der Anoden-/Kathoden-Lage vor deren Aufnehmen durch eine Stapelvorrichtung, der Position und/ oder Orientierung der Stapelvorrichtung, und/oder der Position und/oder Orientierung der aufgenommenen einzelnen Anoden-/Kathoden-Lage relativ zur Stapelvorrichtung während eines Transportierens der Anoden-/Kathoden-Lage zur Stapelstelle. In Varianten der Vorrichtung ist die Steuereinheit dazu bestimmt und eingerichtet, diese Korrekturwerte beim Ausrichten der Stapelvorrichtung mit der transportierten Anoden-/Kathoden-Lage relativ zur Stapelstelle in Stell-Befehlen an die Stell-Einrichtung, die Fördereinrichtung und/oder die Stapelvorrichtung zu berücksichtigen. In Varianten der Vorrichtung ist eine Steuereinheit dazu bestimmt und eingerichtet, diese Korrekturwerte die Ausrichtung und den Ort der Stapelvorrichtung beim Aufnehmen der Anoden-/Kathoden-Lage in Stell-Befehlen an die Stell-Einrichtung, die Fördereinrichtung und/oder die Stapelvorrichtung derart zu berücksichtigen, dass die Stapelvorrichtung die jeweilige Anoden-/Kathoden-Lage in einer mittigen Null-Position und/oder zum an der Stapelstelle befindlichen Elektrodenstapel fluchtend ausgerichtet aufnimmt.

Durch Überprüfung der Position der ankommenden Anoden-/Kathoden-Lage vor oder in der Aufnehmstelle ist die Ausrichtung und der Ort der Stapelvorrichtung beim oder vor dem Aufnehmen der Anoden-/Kathoden-Lage genau zu bestimmen. Dies erlaubt ein genau bestimmtes, korrigiertes Aufnehmen der Anoden-/Kathoden-Lage durch die Stapelvorrichtung. Während des Förderns der Stapelvorrichtung in die Stapelstelle findet in einer Variante eine weitere Überprüfung der Ausrichtung und des Orts der angehobenen einzelnen Anoden-/Kathoden-Lage statt, was die Präzision der Ablage der einzelnen Anoden-/Kathoden-Lage auf dem Elektrodenstapel an der Stapelstelle zusätzlich erhöht.

Ein weiteres Inspektionsverfahren bei der Herstellung von Modulen oder Vorstufen von Modulen umfasst, zum Beispiel in folgender Reihenfolge, die Schritte: Bereitstellen einer vereinzelten Anoden-/Kathoden-Lage; Transportieren der Anoden-/Kathoden-Lage zu einer Stapelstelle durch eine Stapelvorrichtung; Abstapeln der transportierten Anoden-/Kathoden-Lage an der Stapelstelle; Erfassen eines um die abgestapelte Anoden-/Kathoden-Lage an der Stapelstelle angewachsenen Elektrodenstapels in wenigstens einer Seitenansicht und/oder einer Hochkante des Elektrodenstapels an der Stapelstelle; und Überprüfen der Ausrichtung und/ oder Position der oder jeder abgestapelten Anoden-/Kathoden-Lage relativ zum übrigen an der Stapelstelle angewachsenen Elektrodenstapel.

Dieses Vorgehen erlaubt eine genaue Positionsbestimmung der obersten Lage im Verhältnis zu den übrigen Lagen des Elektrodenstapels. Diese Prüfung ist mit zunehmender Höhe des Elektrodenstapels zunehmend wichtiger, da eine fehlerhaft positionierte Ablage der obersten Lage ohne weitere Korrektur zu einem Verwerfen des Elektrodenstapels führen muss. Allerdings wird die Kontrolle mit zunehmender Höhe des Elektrodenstapels zunehmend genauer, da die zu vermessenden geometrischen Bereiche (Ecke oder Hochkante des Elektrodenstapels) einfacher und präziser erfasst und ausgewertet werden können.

In einer Variante des Verfahrens erlaubt dies auch die Berechnung genauerer Korrekturwerte bei der Ablage der nächstfolgenden Lage auf dem Elektrodenstapel. Insgesamt erlaubt diese Vorgehensweise mit der genauen Positionsüberprüfung eine erhebliche Verminderung des Kurzschlussrisikos zum Beispiel der Brennstoff- oder Batterie-Zellen.

Dies wird auch dadurch deutlich, dass bisherige Lösungen die Lagen lediglich mit ± 0.5 mm Genauigkeit ablegen, während die hier vorgestellte Lösung zum Verringern des Ausschusses und eines besseren Wirkungsgrads eine Genauigkeit beim Ablegen der Anoden-/Kathoden-Lagen auf dem Elektrodenstapel von ± 0.1 mm und genauer erlaubt.

Nach dem Ablegen der Anoden-/Kathoden-Lagen auf dem Elektrodenstapel wird die Position / der Versatz der einzelnen Lagen zueinander überprüft und damit einhergehend, ob / mit welcher Abweichung in Längs- oder Querrichtung die einzelnen Lagen des gesamten Elektrodenstapels zueinander fluchten. Hierbei wird in einer Variante ein Versatz der einzelnen Lagen zueinander mit einem (einzigen) Bildeinzug wenigstens einer dritten Kamera von wenigstens einer (Hoch- und/ oder Quer-) Kante des (bis zum aktuellen Bildeinzug angewachsenen) Elektrodenstapels. Durch Analyse des erhaltenen Bildeinzugs mit Mitteln der Bildverarbeitung (Ecken-/Kantensuche, etc) kann überprüft werden, ob eine oder mehrere Lagen des Elektrodenstapels gegenüber den übrigen Lagen in Längs- oder Querrichtung über- oder unterstehen, und ob eine vor-spezifizierte Genauigkeit beim Abstapeln der Anoden-/Kathoden-Lagen zueinander eingehalten wurde. Die im Wechsel aufeinander abgestapelten Anoden-Lagen und Kathoden-Lagen des Elektrodenstapels haben voneinander abweichende Abmessungen, wodurch sich eine in der Seitenansicht gestufte (Hoch-)Kante ergibt, die entsprechend zu (bild-)verarbeiten ist. Relevant kann sein, mit welcher Abweichung gegenüber den übrigen der Anoden- bzw. Kathoden-Lagen jede einzelne Lage (seitlich) über- / untersteht. Auch relevant kann sein, dass die verschiedenen Anoden-/Kathoden-Lagen stets gleich hohe Stufen im gesamten Elektrodenstapel bilden. Letzteres ist ein Beleg dafür, dass sie einzelnen Anoden-/Kathoden-Lagen ohne Falten oder Knicke abgestapelt wurden.

Dazu werden in einer Variante des Verfahrens im Wechsel aufeinander abgestapelte Anoden-Lagen und Kathoden-Lagen des Elektrodenstapels, die unterschiedliche Abmessungen mit einer in der Seitenansicht in z-Richtung gestuften (Hoch-)Kante aufweisen, auf ihre Gestalt und/ oder Abmessungen untersucht. In einer Variante des Verfahrens werden im Wechsel aufeinander abgestapelte Anoden-Lagen und Kathoden-Lagen des Elektrodenstapels untersucht, mit welcher Abweichung gegenüber den übrigen der Anoden- bzw. Kathoden-Lagen des Elektrodenstapels jede einzelne Lage (seitlich) über- / untersteht. In einer Variante des Verfahrens wird untersucht wird, mit welcher Abweichung in der z-Richtung (Hochachse) die verschiedenen Anoden-/Kathoden-Lagen Stufen im Elektrodenstapel bilden.

Gemäss der Erfindung werden zwei dritte Matrixkameras verwendet, die (von oben gesehen) auf diagonal gegenüberliegende Ecken / (Hoch-) Kanten des Elektrodenstapels an der Ablegestelle gerichtet werden. Dabei werden die Kameras auf die jeweilige Kante des Elektrodenstapels eingestellt. In einer Variante des Verfahrens werden zur Beleuchtung der jeweiligen Kante des Elektrodenstapels (weiße) Punktstrahler verwendet, die die gewünschte Position ausleuchten.

In einer Variante des Verfahrens werden vier dritte Matrixkameras verwendet, die (von oben gesehen) auf alle vier Ecken / (Hoch-) Kanten des Elektrodenstapels an der Ablegestelle gerichtet werden. In einer Variante des Verfahrens wird mittels jeweiliger Lichtquellen eine Hintergrundbeleuchtung (backlight) oder eine Dunkelfeldbeleuchtung (darkfield) bewirkt. Damit sind die relevanten Bereiche der verschiedenen Anoden-/Kathoden-Lagen im Durchlicht gut zu erkennen. In einer Variante des Verfahrens wird mit Spiegeln oder Prismen der Strahlengang der dritten Kameras zur Adaption an räumliche Gegebenheiten geführt.

In einer Variante des Verfahrens wird eine dritte Matrixkamera verwendet mit einem Sichtfeld auf den Elektrodenstapel von oben, die den Elektrodenstapel als Ganzes vollständig in einem Bildeinzug erfasst, oder zwei dritte Matrixkameras, die jeweils eine von zwei diagonalen Ecken des Elektrodenstapels von oben erfassen, bis vier dritte Matrixkameras, die alle vier Ecken des Elektrodenstapels von oben erfassen, und die in der Draufsicht auf den Elektrodenstapel an der Ablegestelle gerichtet werden. Auch hier wird in einer Variante durch entsprechende Anordnungen von Spiegeln oder Prismen der Strahlengang der Kameras zur Adaption an räumliche Gegebenheiten geführt. Für die Beleuchtung werden in einer Variante für jede der dritten Kameras eine koaxiale (rote) Beleuchtung und ein (weißer) Punktstrahler verwendet.

Damit ist sehr präzise zu erkennen, dass die Anoden-/Kathoden-Lagen stets an der korrekten Stelle auf dem Elektrodenstapel abgelegt werden.

In einer Variante des Verfahrens werden auch die Bewegungen der Hubvorrichtung mit dem jeweiligen Werkstückträger längs der Hoch-Achse (z-Achse) und deren Ungenauigkeiten berücksichtigt, indem vor dem Beginn des Ablegens der Anoden-/Kathoden-Lagen zum Bilden des Elektrodenstapels die x-, y- Positionen des Werkstückträgers bei verschiedenen z-Höhen mit den dritten Kameras erfasst werden. So kann mit den dritten Kameras während des Ablegens der Anoden-/Kathoden-Lagen überprüft werden, ob die Anoden-/Kathoden-Lagen an der richtigen x-, y- Position abgestapelt wurden, die der jeweiligen z-Position des Werkstückträgers auf der Hubvorrichtung entspricht. Auch die Genauigkeit in der Drehrichtung um die Hochachse (in theta) beim Aufnehmen der Anoden-/Kathoden-Lagen mit der Stapelvorrichtung kann hierdurch auskorrigiert für ein späteres präzises Abstapeln der Anoden-/Kathoden-Lagen des Elektrodenstapels.

Eine Vorrichtung zum Fördern und Inspizieren von Modulen oder Vorstufen von Modulen ist ausgestattet mit einer Aufnehmstelle zum Bereitstellen einer vereinzelten Anoden-/Kathoden-Lage; einer Stapelvorrichtung, bestimmt und eingerichtet zum Transportieren der Anoden-/Kathoden-Lage zu einer Stapelstelle; zum Abstapeln der transportierten Anoden-/Kathoden-Lage an der Stapelstelle; einer Kamera, bestimmt und eingerichtet zum Erfassen eines Bildeinzugs eines um die abgestapelte Anoden-/Kathoden-Lage an der Stapelstelle angewachsenen Elektrodenstapels in wenigstens einer Seitenansicht und/oder einschließlich einer Hochkante in z-Richtung des Elektrodenstapels an der Stapelstelle; und einer Steuereinheit, bestimmt und eingerichtet, um aus dem Bildeinzug der zweiten Kamera die Ausrichtung und/ oder Position der oder jeder abgestapelten Anoden-/Kathoden-Lage relativ zum übrigen an der Stapelstelle angewachsenen Elektrodenstapel zu ermitteln.

In einer Variante der Vorrichtung ist die Steuereinheit dazu bestimmt und eingerichtet, eine Position einer abgestapelten Anoden-/Kathoden-Lage im Verhältnis zu den übrigen Lagen des Elektrodenstapels zu bestimmen, indem nach dem Ablegen der Anoden-/Kathoden-Lagen auf dem Elektrodenstapel die Position / ein Verdrehen / ein Versatz der einzelnen der Anoden-/Kathoden-Lagen zueinander überprüft wird, und/oder wobei die Steuereinheit dazu bestimmt und eingerichtet ist, einen Versatz der einzelnen der Anoden-/Kathoden-Lagen zueinander mit einem Bildeinzug wenigstens einer dritten Kamera von wenigstens einer (Hoch- und/ oder Quer-) Kante des Elektrodenstapels zu ermitteln. In einer Variante der Vorrichtung ist die Steuereinheit dazu bestimmt und eingerichtet, einen erhaltenen Bildeinzug durch Ecken- / Kantensuche dahingehend zu überprüfen, ob eine oder mehrere der Anoden-/Kathoden-Lagen des Elektrodenstapels gegenüber den übrigen Anoden-/Kathoden-Lagen über- oder unterstehen, und/oder ob eine Genauigkeit beim Abstapeln der Anoden-/Kathoden-Lagen eingehalten wurde.

In einer Variante der Vorrichtung ist die Steuereinheit dazu bestimmt und eingerichtet, aus dem Bildeinzug im Wechsel aufeinander abgestapelter Anoden-Lagen und Kathoden-Lagen des Elektrodenstapels unterschiedliche Abmessungen mit einer in der Seitenansicht in z-Richtung gestuften (Hoch-)Kante zu ermitteln, und die aufeinander abgestapelten Anoden-Lagen und Kathoden-Lagen auf ihre Gestalt und/oder Abmessungen hin zu untersuchen. In einer Variante der Vorrichtung ist die Steuereinheit dazu bestimmt und eingerichtet, an den aufeinander abgestapelten Anoden-Lagen und Kathoden-Lagen zu untersuchen, mit welcher Abweichung gegenüber den übrigen der Anoden- bzw. Kathoden-Lagen des Elektrodenstapels jede einzelne Lage über- / untersteht. In einer Variante der Vorrichtung ist die Steuereinheit dazu bestimmt und eingerichtet, einen Bildeinzug dahingehend zu untersuchen, mit welcher Abweichung in der z-Richtung (Hochachse) die verschiedenen Anoden-/Kathoden-Lagen Stufen im Elektrodenstapel bilden.

In der erfindugnsgemässen Vorrichtung ist die Steuereinheit dazu bestimmt und eingerichtet, von wenigstens zwei dritten Kameras Bildeinzüge zu empfangen, die von der Seite auf von oben gesehen diagonal gegenüberliegende Ecken und/oder deren Kanten in der Hochachse (z-Achse) des Elektrodenstapels ES an der Ablegestelle enthalten, um an den aufeinander abgestapelten Anoden-Lagen und Kathoden-Lagen zu untersuchen, mit welcher Abweichung in der x oder y-Richtung (quer, längs) gegenüber den übrigen der Anoden- bzw. Kathoden-Lagen des Elektrodenstapels jede einzelne Lage in Längs- und/oder Querrichtung der Lagen über-/untersteht; und/oder zu untersuchen, mit welcher Abweichung in der z-Richtung (Hochachse) die verschiedenen Anoden-/Kathoden-Lagen Stufen im Elektrodenstapel bilden. In einer Variante der Vorrichtung sind die wenigstens zwei dritten Kameras auf eine (Hoch-)Kante des Elektrodenstapels ausgerichtet, und/oder zur Beleuchtung der jeweiligen Kante des Elektrodenstapels (weiße) Punktstrahler die gewünschte Position an dem Elektrodenstapel auszuleuchten.

In einer Variante der Vorrichtung ist die Steuereinheit dazu bestimmt und eingerichtet, von wenigstens vier dritten Kameras Bildeinzüge zu empfangen, welche die von oben gesehenen vier Ecken des Elektrodenstapels an der Ablegestelle enthalten, um eine Position der obersten abgestapelten Anoden-/Kathoden-Lage im Verhältnis zu wenigstens einer darunter liegenden Lage des Elektrodenstapels zu bestimmen, indem nach dem Ablegen der Anoden-/Kathoden-Lagen auf dem Elektrodenstapel die Position / ein Verdrehen / ein Versatz der einzelnen der Anoden-/Kathoden-Lagen zueinander überprüft wird, mittels eines Bildeinzugs von jeder der vier Kameras.

In einer Variante der Vorrichtung ist die Steuereinheit dazu bestimmt und eingerichtet, Bewegungen der Hubvorrichtung mit dem jeweiligen Werkstückträger längs der Hoch-Achse (z-Achse) und deren Ungenauigkeiten zu berücksichtigen, indem vor dem Beginn des Ablegens der Anoden-/Kathoden-Lagen zum Bilden des Elektrodenstapels die x-, y- Positionen des Werkstückträgers bei verschiedenen z-Höhen mit den dritten Kameras mittels Bildeinzügen erfasst werden, die entsprechenden Daten in einem Datenspeicher gespeichert werden zum Vergleich mit x-, y- Positionen des Werkstückträgers bei verschiedenen z-Höhen während des Ablegens der Anoden-/Kathoden-Lagen, um zu überprüfen, ob die Anoden-/Kathoden-Lagen innerhalb der Genauigkeit an der x-, y- Position abgestapelt wurden, die der jeweiligen z-Position des Werkstückträgers auf der Hubvorrichtung entspricht, und/oder zum Auskorrigieren der Orientierung in der Drehrichtung um die z-Achse (Hoch-Achse) (in theta) beim Aufnehmen der Anoden-/Kathoden-Lagen mit der Stapelvorrichtung.

Die vorstehend beschriebenen Vorgehensweisen und Vorrichtungen erlauben eine erhebliche Verminderung des Kurzschlussrisikos des so gebildeten Moduls, was auch zu einer Erhöhung der Gesamtqualität und Effizienz der Brennstoff- oder Batteriezelle führt.

Insgesamt erlaubt die oben beschriebene Vorrichtung und das Verfahren, bei hohem Stapel-Durchsatz eine Genauigkeit von ± 0.1 mm oder genauer.

Vorstehend sind Verfahrensaspekte in Vorrichtungsbegriffen und *vice versa* dargestellt. Dabei dienen sowohl die Verfahrensaspekte als auch die Vorrichtungsaspekte zur Erläuterung der Anordnung und ihres Betriebes.

### Kurzbeschreibung der Figuren

Weitere Merkmale, Eigenschaften und Vorteile der Vorrichtungen und der Verfahrensweisen sind der nachfolgenden Beschreibung in Verbindung mit der Zeichnung zu entnehmen. Mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen und erläutern deren Betrieb. Hierbei zeigen:
Fig. 1 eine Montagelinie mit Inspektion bei der Herstellung von Modulen oder Vorstufen von Modulen in einer schematischen Draufsicht;
Fig. 1a eine zweite Kameraanordnung zum Inspizieren der Lagen vor deren Aufnehmen durch die Stapelvorrichtung;
Fig. 2 eine als Stapeleinheit ausgestaltete Prozess-Station der Montagelinie aus Fig. 1 in einer schematischen Seitenansicht;
Fig. 2a eine erste Variante einer zweiten Kameraanordnung zum Inspizieren der Lagen während des Transports von der Aufnehmstelle an die Stapelstelle mittels der Stapelvorrichtung;
Fig. 2b eine zweite Variante einer zweiten Kameraanordnung zum Inspizieren der Lagen während des Transports von der Aufnehmstelle an die Stapelstelle mittels der Stapelvorrichtung;
Fig. 3 eine Variante einer dritten Kameraanordnung in einer Seitenansicht zum Inspizieren der Lagen eines Elektrodenstapels nach deren Abstapeln an der Stapelstelle mittels der Stapelvorrichtung; und
Fig. 3a die Variante der dritten Kameraanordnung aus Fig. 3 in einer Draufsicht.

### Detaillierte Beschreibung von Varianten der Vorrichtungen und der Verfahrensweisen

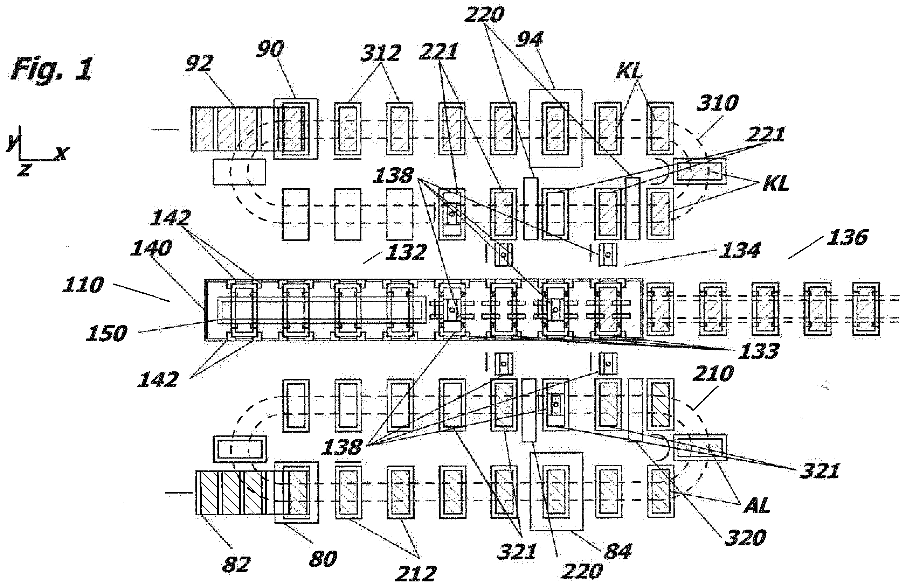

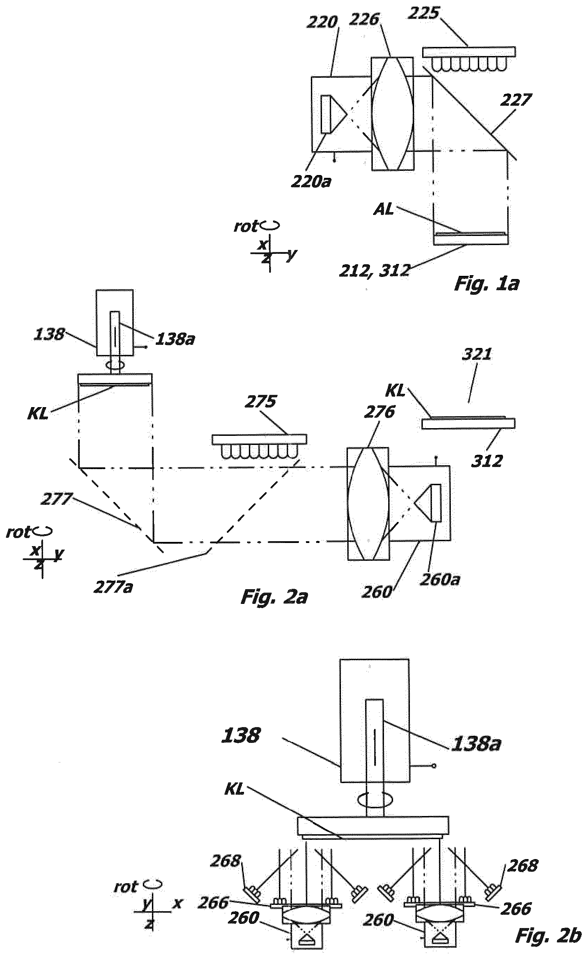

Fig. 1 veranschaulicht schematisch einen Teil einer Montagelinie 100 zur Herstellung von Modulen oder Vorstufen von Modulen. Hier wird die Montagelinie 100 exemplarisch anhand der Herstellung von Brennstoff- oder Batterie-Zellen erläutert, die Lagenmaterial und/oder Fluid enthalten. Eine zentrale Transportstrecke 110 fördert hier eine Vielzahl von Werkstückträgern 120 zwischen mehreren Prozess-Stationen. Die zentrale Transportstrecke 110 ist mittels nicht weiter dargestellter Antriebe dazu eingerichtet, in einzelnen der Transportabschnitte die Werkstückträger 120 gruppenweise zu fördern.

Als Zulieferstationen zu der Montagelinie 100 sind eine erste nicht weiter gezeigte Schneid- oder Stanzstation dazu eingerichtet, ein von einer Rolle kommendes, erstes Endlos-Lagenmaterial in gleichförmige Rechteckstücke zu zerteilen und als Folge von vereinzelten Anoden-Lagen AL auf einen Träger 82 abzugeben. Eine nicht weiter gezeigte zweite Schneid- oder Stanzstation ist dazu eingerichtet, ein von einer Rolle kommendes zweites Endlos-Lagenmaterial in gleichförmige Rechteckstücke zu zerteilen und als Folge von vereinzelten Kathoden-Lagen KL auf einen Träger 92 abzugeben. Eine erste Ablagestation 80 speist die vereinzelten Anoden-Lagen AL auf transportierbare Haft-Tabletts 212 einer ersten Transportstrecke 210 um sie einer Stapeleinheit 138 zuzuführen. Eine zweite Ablagestation 90 speist die vereinzelten Kathoden-Lagen KL auf transportierbare Haft-Tabletts 312 einer zweiten Transportstrecke 310 um sie einer Stapeleinheit 138 zuzuführen. Auf ihrem Transport zur Stapeleinheit 130 werden die Anoden- und Kathoden-Lagen AL, KL durch eine der jeweiligen Transportstrecke 210, 310 zugeordneten Inspektionsstation 84, 94 geführt, um ihre Qualität zu überprüfen. Die Kathode ist in einer Variante eine beidseitig leitfähig beschichtete Metallfolie mit einem abstehenden Ableiter-Tab. Die Anode ist in einer Variante eine beidseitig leitfähige beschichtete Metallfolie, welche zwischen zwei dielektrische Folien (Separatoren) einlaminiert ist, wobei der Stromableiter-Tab seitlich, d.h. an einer der kurzen Seiten zwischen den Separatoren hervorsteht.

Eine derartige Montagelinie 100 hat einen ersten Transportabschnitt 116 mit dem Aufnahmebereich 132, dem Stapelbereich 134 und dem Abgabebereich 136. Im Stapelbereich 134 sind mehrere, zum Beispiel vier, erste Hubvorrichtungen 135 vorgesehen, um Werkstückträger 120 von dem Schlitten 140 in Z-Richtung abzuheben. Dabei ist der Schlitten 140 in und entgegen des Hinwegs 112 entlang eines ersten Transportabschnitts 116 positionierbar. Der Schlitten 140 ist eingerichtet, mehrere leere Werkstückträger 120 gruppenweise von dem Aufnahmebereich 132 in den Stapelbereich 134 und/oder mehrere Werkstückträger, die jeweils einen im Stapelbereich 134 erstellten Stapel tragen, von dem Stapelbereich 134 in den Abgabebereich 136 zu positionieren. Jede Hubvorrichtung 135 ist dazu eingerichtet, den jeweiligen Werkstückträger 120 für ein Stapeln von dem Schlitten 140 gesteuert hochzuheben und abzusenken. Der Schlitten 140 hat in Förderrichtung (x-Richtung) der Werkstückträger 120 eine Länge, die etwa der Erstreckung des Aufnahmebereichs 132 und des Stapelbereichs 134, oder des Stapelbereichs 134 und des Abgabebereichs 136 in Förderrichtung der Werkstückträger 120 zumindest annähernd entspricht. Der Schlitten 140 ist an zwei gegenüberliegenden Linearführungen längsbeweglich angeordnet und hat an jeder Längsseite 2xN Aufnehmer 142 für N zu positionierende Werkstückträger 120. Die Hubvorrichtungen 135 reichen dazu zwischen den Linearführungen hindurch und können so die N Werkstückträger 120 an ihrer jeweiligen x-, y-Position verbleibend in z-Richtung anheben, während der Schlitten 140 entlang den Linearführungen (in x-Richtung) bewegt wird. Analog ist für die N Werkstückträger 120 die Hubvorrichtung 150 im Aufnahmebereich 132 und jeweils eine Hubvorrichtung im Abgabebereich 136 vorgesehen.

Im Aufnahmebereich 132 sind in der hier gezeigten Variante jeweils mehrere - hier als Vierer-Gruppe - Werkstückträger 120 aus der zentralen Transportstrecke 110 zu entnehmen. In anderen Varianten sind auch mehr oder weniger als vier Werkstückträger 120 aus der zentralen Transportstrecke 110 zu entnehmen. Dazu hat die zentrale Transportstrecke 110 aufstromseitig zu der Stapeleinheit 130 im Aufnahmebereich 132 eine Hubvorrichtung 150, die in einer Variante Teil der zentralen Transportstrecke 110 sein kann, hier in Gestalt eines Scherenhubtischs. Die Hubvorrichtung 150 ist dazu eingerichtet, im Aufnahmebereich 132 eine Vierer-Gruppe der Werkstückträger 120 von der zentralen Transportstrecke 110 abzuheben und auf einen Schlitten 140 zu setzen. Der Schlitten 140 kann in einer Variante ebenfalls ein Teil der zentralen Transportstrecke 110 sein. Dieser Schlitten 140 bei der Stapeleinheit 130 ist in der und gegen die Förderrichtung x der Werkstückträger 120 gesteuert mittels eines nicht weiter veranschaulichten Antriebs zu bewegen um die Gruppe der Werkstückträger 120 in dem Aufnahmebereich 132 aufzunehmen, von dem Aufnahmebereich 132 in einen Stapelbereich 134, und von dem Stapelbereich 134 in einen Abgabebereich 136 zu fördern.

Im Stapelbereich 134 werden mit einer der Anzahl der Werkstückträger 120 in der Gruppe entsprechenden Anzahl von Stapelvorrichtungen 138 (hier vier) von einer jeweiligen zu beiden Längsseiten der zentralen Transportstrecke 110 befindlichen ersten und zweiten Transportstrecke 210, 310 mit Unterdruck- oder Haft-Tabletts 212, 312, auch Shuttles genannt, einzelne Anoden-Lagen AL und einzelne Kathoden-Lagen KL in den Stapelbereich 134 transportiert (siehe auch Fig. 1). Mit anderen Worten sind jedem Werkstückträger 120 im Stapelbereich 134 zwei Stapelvorrichtungen 138 zugeordnet. Dazu ist die Anordnung der Stapelvorrichtungen 138 mit nicht weiter veranschaulichten jeweiligen Antrieben ausgestattet, um die Stapelvorrichtungen 138 individuell vertikal in z-Richtung zum Anheben und Absenken der einzelnen Anoden- und Kathoden-Lagen KL zu bewegen. Die Transportstrecken 210, 310 sind in der hier gezeigten Variante jeweils Endlos-Transportstrecken und dazu eingerichtet, die Unterdruck- oder Haft-Tabletts 212, 312 in einer horizontalen Förderebene jeweils entlang einer geschlossenen Bahn zu fördern.

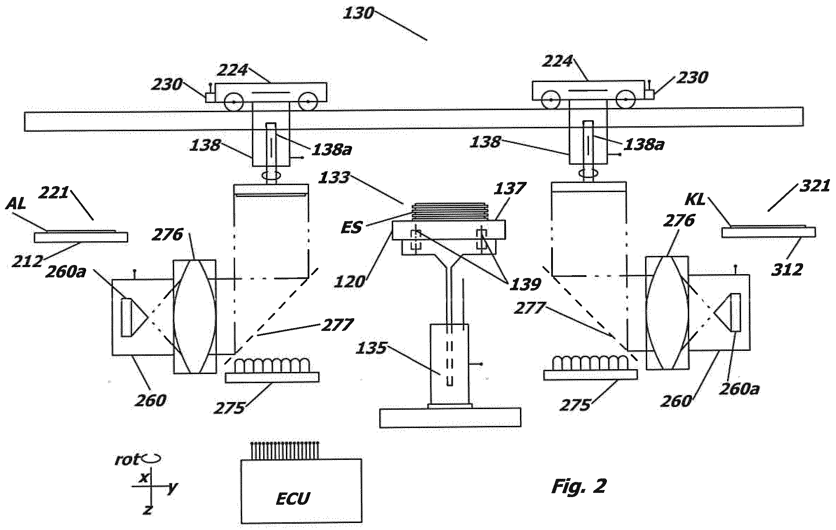

Weitere unten im Zusammenhang mit Fig. 2 veranschaulichte Antriebe 224 dienen dazu, die Stapelvorrichtungen 138 individuell horizontal in y-Richtung, quer zu der zentralen Transportstrecke 110, zu bewegen, um die einzelnen Anoden- und Kathoden-Lagen AL, KL von den Tabletts der ersten und zweiten Transportstrecke 210, 310 zur jeweiligen Stapelstelle 133 auf dem Werkstückträger 120 im Stapelbereich 134 zu transportieren. Dabei werden auf aus der zentralen Transportstrecke 110 entnommene Werkstückträger 120 an den jeweiligen Stapelstellen 133 der Stapeleinheit 130 einzelne Anoden-Lagen AL von einer ersten Seite der Werkstückträger 120, und einzelne Kathoden-Lagen KL von einer zweiten Seite der Werkstückträger 120 abwechselnd zum jeweiligen der Werkstückträger 120 herangebracht und zum Bilden eines Elektroden-Stapels ES auf dem jeweiligen Werkstückträger 120 gestapelt. Die Montagelinie 100 / die Stapeleinheit 130 gemäß Fig. 1 umfasst beispielhaft 4 Stapelstellen 133. Die Stapeleinheit 130 hat des Weiteren mehrere in z-Richtung wirkende erste Hubvorrichtungen 135, je eine pro Werkstückträger 120, um die Werkstückträger 120 gesteuert von dem Schlitten 140 in z-Richtung anzuheben und somit von dem Schlitten 140 zu trennen, und diese/n Werkstückträger 120 gesteuert auf dem Schlitten 140 in z-Richtung abzusetzen. Damit können die Werkstückträger 120 mit dem Lagenmaterial zum Bilden der Elektroden-Stapel ES beschickt werden, während der Schlitten 140 in x-Richtung hin- und herbewegt werden kann.

An jeder Stapelstelle 133 ist eine flächige Aufnahme 137 mit Positionierzapfen 139 vorgesehen, die einen leeren Werkstückträger 120 erhält und hier positionsgenau aufnimmt (siehe Fig. 2).

In der Fig. 2 ist ein in der Stapeleinheit 130 auf einer der ersten Hubvorrichtungen 135 befindlicher Werkstückträger 120 gezeigt, der sich aus dem nicht gezeigten Schlitten 140 herausgehoben an einer Stapelstelle 133 befindet. An dieser Stapelstelle 133 wird der leere Werkstückträger 120 wie nachstehend beschrieben befüllt, und anschließend wieder auf die zentrale Transportstrecke 110 zum Fördern zu einer nachfolgenden Prozess-Station zurückgegeben. Die erste Hubvorrichtung 135 dient wie oben beschrieben dazu, den wenigstens einen leeren Werkstückträger 120 von der zentralen Transportstrecke 110 zu entnehmen. An jeder Stapelstelle 133 transportieren eine Stapelvorrichtung 138 die einzelnen Anoden-Lagen AL (in Fig. 2 links) und eine Stapelvorrichtung 138 die einzelnen Kathoden-Lagen KL (in Fig. 2 rechts) abwechselnd von beiden Seiten des Werkstückträgers 120 in und gegen die y-Richtung heran und stapeln sie in z-Richtung auf dem Werkstückträger 120 ab. So wächst der Elektroden-Stapel ES auf die gewünschte Lagen-Anzahl. In einer Variante erfolgt ein Absenken des Werkstückträgers 120 nach jeder Anoden-Lage AL bzw. Kathoden-Lage in z-Richtung um die Höhe / Dicke einer Anoden-Lagen AL bzw. Kathoden-Lage.

Jede der Stapelvorrichtungen 138 ist dazu vorgesehen und eingerichtet, jeweils entweder die einzelnen Anoden-Lagen AL / die einzelnen Kathoden-Lagen KL mittels gesteuertem pneumatischem Unterdruck aufzunehmen und während des Transports zu der Stapelstelle 133 über dem Werkstückträger 120 zu halten. Jede Stapelvorrichtung 138 hat ein flächiges Greifwerkzeug, das zum Halten und Transportieren einer Anoden-/Kathoden-Lage AL, KL mit Unterdruck zu beaufschlagen ist. In einer Variante ist auch vorgesehen, mittels einem kurzen gesteuerten pneumatischen Überdruck-Stoß die einzelnen Anoden-Lagen AL und die einzelnen Kathoden-Lagen KL an der Stapelstelle 133 abzugeben, um die Lagen AL, KL auf dem Werkstückträger 120 zu stapeln.

Die hier beschriebene Vorrichtung dient neben dem Fördern der Lagen AL, KL zusätzlich dem Inspizieren der Lagen AL, KL auf ihrem Weg von ihren jeweiligen Transportstrecken 210, 310 zu der entsprechenden Stapelstelle 133. Dazu sind im Stapelbereich 134 die Aufnehmstellen 221, 321 vorgesehen, zu denen die vereinzelten Anoden-/Kathoden-Lagen AL, KL mit den mit Unterdruck- oder Haft-Tabletts 212, 312 herantransportiert werden. Bevor die Haft-Tabletts 212, 312 mit den Anoden-/Kathoden-Lagen in der entsprechenden Stapelstelle 133 ankommen, werden die Anoden-/Kathoden-Lagen AL, KL mittels einer zweiten Kamera 220 erfasst. Diese zweite Kamera 220 dient zum Erfassen von Position und/oder Orientierung, hier in x, y und theta, der Anoden-/Kathoden-Lage auf ihrem Haft-Tablett 212, 312 vor dem Aufnehmen der Anoden-/Kathoden-Lagen AL, KL von ihrem Haft-Tablett 212, 312 durch die Stapelvorrichtung 138. Eine Inspektion einer Anoden-Lage AL bzw. einer Kathoden-Lage KL mit der zweiten Kamera 220 kann durchgeführt werden, während das die zu inspizierende Anoden-/Kathoden-Lage AL, KL herantransportierende Unterdruck- oder Haft-Tablett 212, 312 entlang der geschlossenen Bahn der Transportstrecke 210, 310 bewegt werden.

Alternativ kann eine Inspektion einer Anoden-Lage AL bzw. einer Kathoden-Lage KL mit der zweiten Kamera 220 durchgeführt werden, während das die zu inspizierende Anoden-/Kathoden-Lage AL, KL herantransportierende Unterdruck- oder Haft-Tablett 212, 312 (kurzzeitig ,wenige millisec) stillsteht und andere entlang der geschlossenen Bahn der Transportstrecke 210, 310 bewegliche Unterdruck- oder Haft-Tablett 212, 312, zum Beispiel ein unmittelbar entlang der geschlossenen Bahn vor und/oder nach dem für die Inspektion mit der zweiten Kamera 220 (kurzzeitig) stillstehenden Unterdruck- oder Haft-Tablett 212, 312, entlang der geschlossenen Bahn der Transportstrecke 210,310 bewegt werden.

Die zweite Kamera 220 ist derart ausgerichtet, dass sie in senkrechter Draufsicht von der Anoden-/Kathoden-Lage während des Transports deren Position und/oder Orientierung (in x, y, und/oder theta) einen Bildeinzug erfassen kann, kurz bevor die jeweilige Anoden-/Kathoden-Lage AL, KL an ihrer Aufnehmstelle 221, 321 ankommt. In der Fig. 2 sind jeweils zwei der ersten Kameras 220 für die Anoden-Lagen AL und für die Kathoden-Lagen KL veranschaulicht. Es sei verstanden, dass auch vor jeder Aufnehmstelle 221, 321, oder lediglich vor der jeweils ersten Aufnehmstelle 221, 321 jeweils eine zweite Kamera 220 vorgesehen sein kann. Bei jeder ersten Kamera 220 ist eine Weißlichtquelle 225 vorgesehen (siehe Fig. 1a), um die Anoden-/Kathoden-Lage für den Bildeinzug durch die Kamera 220 zu erhellen. Abhängig von den räumlichen Gegebenheiten ist die zweite Kamera 220 - wie auch in Fig. 1a veranschaulicht - als Vollbildkamera ausgestaltet, um die Anoden-/Kathoden-Lage AL, KL mit einem einzigen Bildeinzug vollständig zu erfassen, oder die zweite Kamera als Zeilenkamera ist ausgestaltet um die Position und/oder Orientierung in x, y, und/oder theta der Anoden-/Kathoden-Lage zu erfassen, während sie zu der entsprechenden Aufnehmstelle 221, 321 transportiert wird. Die Vollbildkamera kann zum Beispiel einen digitalen Bilderfassungschip 220a mit 24 Megapixel haben. Abhängig von den Anforderungen an die Genauigkeit und die Auflösung und die räumlichen Gegebenheiten kann auch - mit entsprechender Optik, zum Beispiel einer Linse 226 und einem für das Weißlicht halbdurchlässigen 90° Umlenkspiegel 227 - die zweite Kamera 220 einen Vollbildeinzug von oben auf die Anoden-/Kathoden-Lage bereitstellen.

Jeder Stapelvorrichtung 138 ist eine Fördereinrichtung 224 zugeordnet zum Hin- und Her-Fördern der Stapelvorrichtung 138 zwischen der jeweiligen Aufnehmstelle 221, 321 und der Stapelstelle 133. So werden mit einer der Anzahl der Werkstückträger 120 in der Gruppe entsprechenden Anzahl von Stapelvorrichtungen 138 (hier vier) von einer jeweiligen zu beiden Längsseiten der zentralen Transportstrecke 110 befindlichen ersten und zweiten Transportstrecke 210, 310 mit Unterdruck- oder Haft-Tabletts 212, 312, auch Shuttles genannt, einzelne Anoden-Lagen AL und einzelne Kathoden-Lagen KL in den Stapelbereich 134 transportiert (siehe auch Fig. 1). Mit anderen Worten sind jedem Werkstückträger 120 im Stapelbereich 134 zwei Stapelvorrichtungen 138 zugeordnet. Dazu ist die Anordnung der Stapelvorrichtungen 138 mit jeweiligen Stell-Antrieben 138a ausgestattet, um die Stapelvorrichtungen 138 individuell vertikal in z-Richtung zum Anheben und Absenken der einzelnen Anoden- und Kathoden-Lagen KL zu bewegen. Weitere Antriebe 224 dienen dazu, die Stapelvorrichtungen 138 individuell horizontal in y-Richtung, quer zu der zentralen Transportstrecke 110, zu bewegen, um die einzelnen Anoden- und Kathoden-Lagen AL, KL von den Tabletts 211, 311 der ersten und zweiten Transportstrecke 210, 310 zur jeweiligen Stapelstelle 133 zu transportieren.

Jeweils eine gemeinsame horizontale Linearführung ist für jeweils zwei Stapelvorrichtungen 138 vorgesehen und über einem jeweiligen im Stapelbereich 134 positionierten Werkstückträger angeordnet. Die Linearführung reicht von einer Aufnehmstelle der Transportstrecke 210 zu einer Aufnehmstelle der Transportstrecke 310 und überspannt den Stapelbereich 134.

Sensoren 230 dienen als Erfassungseinrichtung zum Erfassen von Position und/oder Orientierung (in x, y, z, und/oder theta) der Stapelvorrichtung 138. Diese Sensoren 230, von denen hier zur Übersicht nur die Position der Stapelvorrichtung 138 y-Richtung veranschaulicht ist, liefern entsprechende Daten an eine Steuereinheit ECU.

Auf dem Weg von der Aufnehmstelle 221, 321 zur Stapelstelle 133 passiert jede Stapelvorrichtung 138 eine erste Kamera 260. Diese erste Kamera 260 dient dazu, Position und/ oder Orientierung (in x, y, z, und/oder theta) der an der Unterseite der Stapelvorrichtung 138 haftenden Anoden-/Kathoden-Lage AL, KL relativ zur Position und/oder Orientierung (in x, y, z, und/oder theta) der Stapelvorrichtung 138 auf deren Weg zur Stapelstelle 133 zu erfassen. Diese Daten werden der Steuereinheit ECU zugeführt und dort verarbeitet um entsprechende Stell-Einrichtungen, zum Beispiel die Stell-Antriebe 138a, 224, etc anzusteuern. Diese Stell-Einrichtungen umfassen auch nicht weiter veranschaulichte pneumatische Aktoren, damit die Stapelvorrichtung 138 die Anoden-/Kathoden-Lagen AL, KL aufnehmen und ablegen kann, elektrische oder pneumatische Aktoren um die Stapelvorrichtung 138 in x, y, z, und/oder theta auszurichten, während des Transportierens der Anoden-/Kathoden-Lage zur Stapelstelle 133, damit die Anoden-/Kathoden-Lage AL, KL relativ zur Stapelstelle 133 und dem dort befindlichen Elektrodenstapel optimal zum Abstapeln liegt, und zum Abstapeln der Anoden-/Kathoden-Lage an der Stapelstelle 133.

Die erste Kamera 260 dient hier dazu, die Position und/oder Orientierung (in x, y, z, und/ oder theta) der Anoden-/Kathoden-Lage AL, KL relativ zur Stapelvorrichtung 138 vor dem

Abstapeln der Anoden-/Kathoden-Lage AL, KL an der Stapelstelle 133 zu erfassen. Diese Daten werden der Steuereinheit ECU zugeleitet und dort verarbeitet. Die Steuereinheit ECU ermittelt aus dem Bildeinzug und den Daten aus den diversen Erfassungseinrichtungen Korrekturwerte. Insbesondere werden aus der Position und/oder Orientierung (in x, y, z, und/ oder theta) der Anoden-/Kathoden-Lage AL, KL an der Aufnehmstelle oder auf dem Weg dorthin vor deren Aufnehmen durch eine Stapelvorrichtung 138, der Position und/oder Orientierung (in x, y, z, und/oder theta) der Stapelvorrichtung 138 an der Aufnehmstelle oder auf dem Weg dorthin, sowie der Position und/oder Orientierung (in x, y, z, und/oder theta) der aufgenommenen einzelnen Anoden-/Kathoden-Lage relativ zur Stapelvorrichtung 138 während eines Transportierens der Anoden-/Kathoden-Lage zur Stapelstelle 133, die Korrekturwerte ermittelt. Diese Korrekturwerte dienen dazu, die Stapelvorrichtung 138 mit der transportierten Anoden-/Kathoden-Lage relativ zur Stapelstelle 133 in x, y, z, und/oder theta auszurichten, damit die transportierten Anoden-/Kathoden-Lage relativ zum an der Stapelstelle 133 befindlichen Elektrodenstapel ES präzise an ihrer Soll-Position abgelegt wird. Das heißt, diese Korrekturwerte werden bei der Korrektur der Ausrichtung und des Ortes (in x, y, z, und/oder theta) der Stapelvorrichtung 138 beim Aufnehmen der Anoden-/Kathoden-Lage in Stell-Befehle an die Stell-Einrichtung, die Fördereinrichtung 224 und/oder die Stapelvorrichtung 138 derart umgesetzt, dass die Anoden-/Kathoden-Lage zum Beispiel in einer mittigen Null-Position oder zum an der Stapelstelle 133 befindlichen Elektrodenstapel fluchtend ausgerichtet von der Stapelvorrichtung 138 aufgenommen wird.

Die erste Kamera 260 ist derart ausgerichtet, dass während des Transports der Anoden-/Kathoden-Lage deren Position und/oder Orientierung (in x, y, und/oder theta) in senkrechter Ansicht von unten mit einem Bildeinzug erfasst wird, kurz bevor die jeweilige Anoden-/Kathoden-Lage AL, KL an ihrer Stapelstelle 133 ankommt. In der Fig. 2 ist jeweils eine der zweiten Kameras 260 für die Anoden-Lagen AL und eine der zweiten Kameras 260 für die Kathoden-Lagen KL veranschaulicht. Bei jeder zweiten Kamera 260 ist eine Lichtquelle 275, zum Beispiel eine Weißlichtquelle, vorgesehen, um die Anoden-/Kathoden-Lage für den Bildeinzug durch die erste Kamera 260 zu erhellen. Abhängig von den räumlichen Gegebenheiten ist die zweite Kamera 220 - wie auch in Fig. 1a veranschaulicht - als Vollbildkamera ausgestaltet, um die Anoden-/Kathoden-Lage AL, KL mit einem einzigen Bildeinzug vollständig zu erfassen, oder die erste Kamera 260 ist als Zeilenkamera ausgestaltet um die Position und /oder Orientierung in x, y, und/ oder theta der Anoden-/Kathoden-Lage zu erfassen, während sie zu der entsprechenden Stapelstelle 133 transportiert wird. Die Vollbildkamera kann zum Beispiel einen digitalen Bilderfassungschip 260a mit 24 Megapixel haben. Abhängig von den Anforderungen an Genauigkeit und Auflösung und räumliche Gegebenheiten kann auch - mit entsprechender Optik, zum Beispiel einer Linse 276 und einem für das Weißlicht halbdurchlässigen 90° Umlenkspiegel 277 - die erste Kamera 260 einen Vollbildeinzug von unten auf die Anoden-/Kathoden-Lage bereitstellen. Auch die Lichtquelle 275 kann schwenkbar angeordnet sein, um einen optimalen Lichteinfall auf die jeweilige Anoden-/Kathoden-Lage AL, KL zu liefern. So kann zum Beispiel die erste Kamera 260 ein Sichtfeld auf die Anoden-/Kathoden-Lage AL, KL von wenigstens 720 x 400 mm bei einer Auflösung vom 134 µm/pixel oder höher bereitstellen.

Im Strahlengang der zweiten Kamera 260, d.h. im Bereich des vertikalen Abschnitts des Strahlengangs ist eine Ringlichtquelle angeordnet. Licht (ca. 600 - 780nm) von der Ringlichtquelle trifft zur Verstärkung des Kontrasts von Oberflächenfehlern in einem flachen Winkel, d.h. weniger als 45 Grad, auf die Unterseite der Anode bzw. Kathode auf.

In Fig. 2a ist eine Variante einer Anordnung der zweiten Kamera 260 gezeigt. Hier ist die erste Kamera 260 ebenfalls derart ausgerichtet, dass während des Transports der Anoden-/Kathoden-Lage deren Position und/oder Orientierung (in x, y, und/oder theta) in senkrechter Ansicht von unten mit einem Bildeinzug erfasst wird, kurz bevor die jeweilige Anoden-/Kathoden-Lage AL, KL an ihrer Stapelstelle 133 ankommt.

Im Unterschied zur Anordnung in Fig. 2 ist hier die Weißlichtquelle 275 zwischen dem waagrechten Abschnitt des optischen Pfads der Kamera 260 und der Stapelvorrichtung 138 vorgesehen. Dazu ist ein weiterer halbdurchlässiger 90° Umlenkspiegel 277a zwischen der Kamera 260 und dem halbdurchlässigen 90° Umlenkspiegel 277 vorgesehen, um das Weißlicht in den Strahlengang auf die Unterseite der Stapelvorrichtung 138 mit der Anoden-/Kathoden-Lage für den Bildeinzug durch die erste Kamera 260 zu lenken. Im Übrigen entspricht die Anordnung der Kamera in Fig. 2a der aus der Fig. 2.

Anstelle eines Vollbildeinzugs mittels einer - einzigen - Kamera können auch nur ausgewählte Bereiche, hier Eck-/Kantenbereiche der Anoden-/Kathoden-Lage AL, KL während deren Transport auf ihre Position und/oder Orientierung (in x, y, und/oder theta) in senkrechter Ansicht von unten erfasst werden, kurz bevor die jeweilige Anoden-/Kathoden-Lage AL, KL an ihrer Stapelstelle 133 ankommt. Hierzu werden, wie in Fig. 2b gezeigt, mit zwei zweiten Kameras 260 die Eckbereiche der Anoden-/Kathoden-Lage AL, KL senkrecht von unten erfasst, wenn die Anoden-/Kathoden-Lage AL, KL darüber hinwegtransportiert wird. Insbesondere wird von der mittels Unterdruck an der Stapelvorrichtung 138 haftenden Lage KL jeweils ein Bildeinzug an jeder Ecke während des Transport ("on the fly") aufgenommen, d.h. während die an der Stapelvorrichtung gehaltene Anoden-/Kathoden-Lage Al, KL wird kontinuierlich zur Stapelstelle 133 bewegt.

Vor jeder Stapelstelle befinden sich (auf der einen Seite) eine oder zwei Kameras 260 für die Anoden-Lage AL und (auf der anderen Seite) eine oder zwei Kameras 260 für die Kathoden-Lage KL. Der Übersichtlichkeit wegen ist in den Fig. nur jeweils eine Kamera 260 gezeigt. Während die an der Stapelvorrichtung gehaltenen Anoden-/Kathoden-Lage Al, KL an den Kameras 260 vorbeifahren, wird zunächst ein Bild einer Ecke an der vorderen Kante der Lage AL, bzw. KL aufgenommen, bzw. werden zunächst jeweils zwei Bilder der Ecken an der vorderen Kante der Lage AL, bzw. KL aufgenommen. Anschließend wird zunächst ein Bild einer (bevorzugt diagonalen) Ecke an der hinteren Kante der Lage AL, bzw. KL aufgenommen, bzw. werden die beiden anderen Ecken an der hinteren Kante der Lage AL bzw. KL mit den zwei Kameras 260 aufgenommen. Aus etwaigen Abweichungen zwischen den Positionen der Ecken an der vorderen Kante und den Ecken an der hinteren Kante quer zur Transportrichtung der jeweiligen der Lage AL bzw. KL ermittelt die Steuereinheit ECU Korrekturwerte (in x, y, und/ oder theta) für die Bewegung und Orientierung der Stapelvorrichtung 138 relativ zum Ort/den Ecken des Elektrodenstapels ES, so dass die Anoden-/Kathoden-Lage AL, KL beim Erreichen der Stapelstelle 133 mit minimalem (idealerweise gar keinem) weiteren Korrekturbedarf sehr schnell senkrecht auf den Elektrodenstapel ES abgelegt werden kann.

Bei den Stapelvorrichtungen 138 kann in einer Variante die Halte-Fläche des Greifwerkzeugs zum Aufnehmen und Halten einer Anoden-/Kathoden-Lage AL, KL kleiner sein als die Fläche einer Anoden-/Kathoden-Lage AL, KL. Beispielsweise können die (vier) Ecken-Bereiche des Greifwerkzeugs ausgespart sein. Folglich kann eine Anoden-/Kathoden-Lage AL, KL während des Transports in den Ecken-Bereichen von oben, d.h. von der Seite her mit der Lichtquelle 275 beleuchtet werden, welche an dem Greifwerkzeug anliegt. Dadurch können Kanten der Kathoden-Lage KL gegenüber der Umgebung besonders kontrastreich erfasst werden.

In der Fig. 2b umfasst die Anordnung jeder der ersten Kameras eine Matrix-Kamera 260 mit einer roten koaxialen Ring-Beleuchtung 266 und/oder einer blauen Dunkelfeld-Beleuchtung 268. Die Dunkelfeld-Beleuchtung liefert flach (hier unter einem Winkel von 45° zur optischen Achse) eingestrahltes Licht, so dass zum Beispiel die Kantenbereiche Licht zur Kamera hin reflektieren oder streuen und dann im Kamerabild deutlich kontrastiert und hell erscheinen.

Mit einer solchen Anordnung ist eine Erfassung eines quadratischen Bereichs von ca. 21 x21 mm bei einer Auflösung von 10.8 um/pixel oder besser möglich.

Infolge des Vorhandenseins mehrerer benachbarter Stapeleinheiten 130 kann das Inspizieren der Anoden-/Kathoden-Lagen AL, KL parallelisiert werden.

Es kann vorgesehen sein, dass mehrere Anoden für eine erste Gruppe an nicht unmittelbar benachbarten Elektrodenstapeln bzw. Werkstückträgern 120 im Stapelbereich 134, z.B. der erste Werkstückträger und der dritte Werkstückträger, zeitlich überlappend mit der jeweiligen zweiten Kamera 260 inspiziert werden und/oder mehrere Kathoden für eine zweite, verschieden von der ersten, Gruppe an nicht unmittelbar benachbarten Elektrodenstapeln bzw. Werkstückträgern 120 im Stapelbereich, z.B. Werkstückträger 2 und 4, zeitlich überlappend mit der jeweiligen zweiten Kamera 260 inspiziert werden.

Da sich direkt benachbarte Stapelvorrichtungen 138 aufeinander zu bewegen, d.h. einander entgegengesetzte Bewegungen in Y-Richtung ausführen, können Schwingungen/Vibrationen ausgeglichen und eine effiziente Inspektion erreicht werden.

Alternativ kann vorgesehen sein, dass die Anoden-Lagen und die Kathoden-Lagen an den mehreren Aufnehmstellen der jeweiligen Transportstrecke 210, 310 gruppenweise durch die Unterdruck- oder Haft-Tablett 212, 312 bereitgestellt werden.

In einer anderen Variante erfolgt eine gruppenweise Inspektion durch die Kamera 260 für die Anoden- und für die Kathoden-Lagen. In einer nicht gezeigten Variante sind z.B. eine andere Auflösung und anderes Sichtfeld zu erhalten, wobei auch vier Kameras 260 einzusetzen sind, um alle vier Ecken gleichzeitig zu inspizieren, oder eine Zeilenkamera.

Sämtliche der oben beschriebenen Varianten der Inspektion dienen dazu, um zumindest einmal die genaue Position der Anoden-/Kathoden-Lage AL, KL zu bestimmen um dann vor dem Ablegen die Ausrichtung zu korrigieren. Durch optisches Erfassen von Position und Ausrichtung charakteristischer Bereiche (Ecken, Kanten) der Lagen AL, KL in der Aufnehmstelle und/ oder während des Transports zur Stapelstelle 133, und Verwenden der so gewonnenen Daten zur Korrektur der Ausrichtung der Stapelvorrichtung 138 relativ zum Elektrodenstapel ES an der Stapelstelle 133 vor und/oder während des Transports der der Lagen AL, KL zur Stapelstelle 133 ist dieses Ablegen zeiteffizient und mit hoher Präzision möglich.

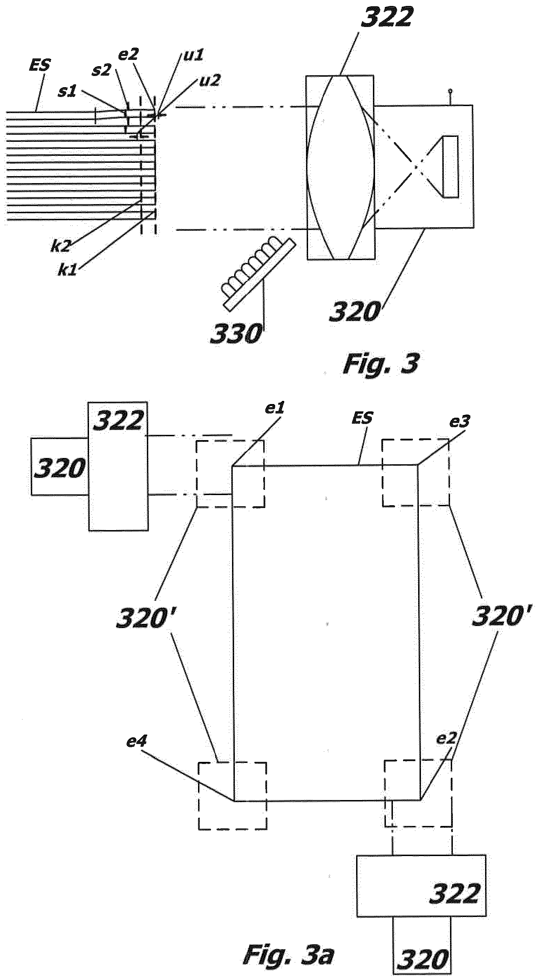

Anhand der Fig. 2 und 3 wird nachstehend ein weiteres Inspektionsverfahren erläutert, das bei der Herstellung von Modulen oder Vorstufen von Modulen einzusetzen ist. In einem ersten Schritt erfolgt ein Bereitstellen einer vereinzelten Anoden-/Kathoden-Lage AL, KL auf einem jeweiligen Unterdruck- oder Haft-Tablett 212, 312. Anschließend wird die vereinzelte Anoden-/Kathoden-Lage AL, KL durch eine Stapelvorrichtung 138 zu einer Stapelstelle 133 transportiert. Dort erfolgt ein Abstapeln der transportierten Anoden-/Kathoden-Lage AL, KL. An der Stapelstelle 133 erfolgt ein Erfassen eines um die abgestapelte Anoden-/Kathoden-Lage AL, KL an der Stapelstelle 133 angewachsenen Elektrodenstapels ES in wenigstens einer Seitenansicht und/oder einschließlich einer Hochkante des Elektrodenstapels ES. Dieses Erfassen der Seitenansicht oder einer Hochkante des Elektrodenstapels ES liefert in einer Variante des Verfahrens einen Bildeinzug. Schließlich folgt ein Überprüfen der Ausrichtung und/oder der Position der oder jeder abgestapelten Anoden-/Kathoden-Lage AL, KL relativ zum übrigen an der Stapelstelle angewachsenen Elektrodenstapel.

Eine Position einer abgestapelten Anoden-/Kathoden-Lage AL, KL im Verhältnis zu den übrigen Lagen des Elektrodenstapels ES wird zum Beispiel bestimmt, indem nach dem Ablegen der Anoden-/Kathoden-Lagen AL, KL auf dem Elektrodenstapel ES die Position / ein Verdrehen / ein Versatz der einzelnen der Anoden-/Kathoden-Lagen AL, KL zueinander überprüft wird. Ein Versatz der einzelnen der Anoden-/Kathoden-Lagen (AL, KL) zueinander kann zum Beispiel mit einem Bildeinzug wenigstens einer dritten Kamera 320 von wenigstens einer (Hoch- und/ oder Quer-) Kante des Elektrodenstapels ES ermittelt werden. Dabei kann zum Beispiel ein erhaltener Bildeinzug mit Verfahren der computergestützten Bildverarbeitung durch Ecken- / Kantensuche dahingehend überprüft werden, ob eine oder mehrere der Anoden-/Kathoden-Lagen AL, KL des Elektrodenstapels ES gegenüber den übrigen Anoden-/Kathoden-Lagen AL, KL seitlich oder in Längsrichtung über- oder unterstehen, und/oder ob eine vorgegebene Genauigkeit beim Abstapeln der Anoden-/Kathoden-Lagen AL, KL eingehalten wurde. Eine Variante zur Kantensuche wendet einen Canny-Algorithmus (Canny edge detector) an, der ein Bild liefert, das idealerweise nur noch die Kanten des Ausgangsbildes enthält.

Im Wechsel aufeinander abgestapelte Anoden-Lagen AL und Kathoden-Lagen KL des Elektrodenstapels ES haben in der Regel unterschiedliche Abmessungen. Dies führt beim Abstapeln zu einer in der Seitenansicht in z-Richtung gestuften (Hoch-)Kante. Mittels der erfassten Bildeinzüge wird diese Hochkante oder die beiden Hochkanten k1, k2, siehe Fig. 3 untersucht. Dabei werden die aufeinander abgestapelten Anoden-Lagen AL und Kathoden-Lagen KL auf ihre Gestalt und/oder Abmessungen untersucht. In anderen Varianten wird an den aufeinander abgestapelten Anoden-Lagen AL und Kathoden-Lagen KL untersucht, mit welcher Abweichung gegenüber den übrigen der Anoden- bzw. Kathoden-Lagen AL, KL des Elektrodenstapels ES jede einzelne Lage seitlich oder in Längsrichtung über- oder untersteht. Aus diesen Über-/Unterständen (u1, u2 in Fig. 3) lässt sich auch eine Drehung um die Hochachse (in theta) ermitteln, oder mit welcher Abweichung in der z-Richtung (Hochachse) die verschiedenen Anoden-/Kathoden-Lagen (AL, KL) Stufen (s1, s2 in Fig. 3) im Elektrodenstapel bilden.

In Fig. 3, 3a ist veranschaulicht, wie zwei dritte Kameras 320 von der Seite auf von oben gesehen diagonal gegenüberliegende Ecken e1, e2 und/oder deren Kanten k1, k2 (siehe Fig. 3) in der Hochachse (z-Achse) des Elektrodenstapels ES an der Ablegestelle gerichtet werden. So wird an den aufeinander abgestapelten Anoden-Lagen (AL) und Kathoden-Lagen KL untersucht, mit welcher Abweichung u1, u2 (siehe Fig. 3) in der x oder y-Richtung (quer, längs) gegenüber den übrigen der Anoden- bzw. Kathoden-Lagen AL, KL des Elektrodenstapels ES jede einzelne Lage in Längs- und/oder Querrichtung der Lagen über- / untersteht. Damit ist eine Abweichung s1, s2 der Stufen (siehe Fig. 3) in der z-Richtung (Hochachse) zu untersuchen welche die aufeinander liegenden Anoden-/Kathoden-Lagen AL, KL im Elektrodenstapel bilden.

Dabei sind die zwei dritten Kameras 320 direkt auf eine Hoch-Kante des Elektrodenstapels ausgerichtet. Des Weiteren kann zur Beleuchtung der jeweiligen Kante des Elektrodenstapels ES ein weißer Punktstrahler 330 verwendet werden, um im Winkel von etwa 45° zur optischen Achse der jeweiligen dritten Kamera 320 die gewünschte Position auszuleuchten.

In einer in Fig. 3a gestrichelt eingezeichneten Variante sind vier dritte Kameras 320' senkrecht von oben, mit nicht weiter dargestellten Punktstrahlern 330, auf die von oben gesehenen vier Ecken e1, e2, e3, e4 des Elektrodenstapels an der Ablegestelle gerichtet. Damit ist eine Position der obersten abgestapelten Anoden-/Kathoden-Lage AL, KL im Verhältnis zu wenigstens einer darunterliegenden Lage des Elektrodenstapels ES zu bestimmen. Dabei wird mittels eines Bildeinzugs von jeder der vier Kameras 320' nach dem Ablegen der Anoden-/Kathoden-Lagen AL, KL auf dem Elektrodenstapel ES die Position / ein Verdrehen / ein Versatz der einzelnen der Anoden-/Kathoden-Lagen AL, KL zueinander überprüft.

Mit den seitlich auf die Hochkante des Elektrodenstapels ES gerichteten Kameras 320 (siehe Fig. 3) sind Bewegungen der Hubvorrichtung 135 mit dem jeweiligen Werkstückträger 120 längs der Hoch-Achse (z-Achse) durch entsprechende Verarbeitung der Bildeinzüge zu ermitteln. Vor dem Beginn des Ablegens der Anoden-/Kathoden-Lagen Al, KL zum Bilden des Elektrodenstapels ES werden damit die x-, y- Positionen des Werkstückträgers bei verschiedenen z-Höhen mit den dritten Kameras 320 aus dabei gewonnenen Bildeinzügen erfasst. Die entsprechenden Daten werden gespeichert zum Vergleich mit x-, y- Positionen des Werkstückträgers bei verschiedenen z-Höhen während des Ablegens der Anoden-/Kathoden-Lagen, um zu überprüfen, ob die Anoden-/Kathoden-Lagen innerhalb einer vorgegebenen Genauigkeit an der x-, y- Position abgestapelt wurden, die der jeweiligen z-Position des Werkstückträgers auf der Hubvorrichtung 135 entspricht. In einer Variante diesen die oben gewonnenen Daten zum Auskorrigieren der Orientierung in der Drehrichtung um die z-Achse (Hoch-Achse) (in theta) beim Aufnehmen der Anoden-/Kathoden-Lagen mit der Stapelvorrichtung 138.

Aus den verarbeiteten Daten der Bildeinzüge aus den Kameras, insbesondere zumindest einer der dritten Kameras, ist in einer Variante auch vorgesehen, mit der Stapelvorrichtung 138 eine fehlerhaft abgelegte Lage von dem Elektrodenstapel ES erneut aufzunehmen und wahlweise erneut korrekt auf dem Elektrodenstapel abzulegen, oder zu einer Position zu transportieren, an der sie verworfen wird.

## Patentansprüche

1. Ein Inspektionsverfahren bei der Herstellung von Modulen oder Vorstufen von Modulen umfasst die Schritte:
- Bereitstellen einer vereinzelten Anoden oder Kathoden-Lage (AL, KL);
- Transportieren der Anoden- oder Kathoden-Lage (AL, KL) in einer x-Richtung zu einer Stapelstelle (133) durch eine Stapelvorrichtung (138), wobei die x-Richtung quer zu einer y-Richtung verläuft;
- Abstapeln der transportierten Anoden- oder Kathoden-Lage (AL, KL) in einer z-Richtung an der Stapelstelle (133), wobei die z-Richtung quer zur x-Richtung und quer zur y-Richtung verläuft;
- Erfassen einer Kante (k1, k2) in der z-Richtung eines um die abgestapelte Anoden- oder Kathoden-Lage (AL, KL) an der Stapelstelle (133) angewachsenen Elektrodenstapels (ES) an der Stapelstelle (133) mit einem Bildeinzug einer dritten Kamera (320); und
- Überprüfen der Ausrichtung der abgestapelten Anoden- oder Kathoden-Lage (AL, KL) relativ zum übrigen an der Stapelstelle (133) angewachsenen Elektrodenstapel (ES);
wobei das Inspektionsverfahren **dadurch gekennzeichnet ist, dass** wenigstens zwei dritte Kameras (320) von der Seite auf von oben gesehen diagonal gegenüberliegende Kanten (k1, k2) in der z-Richtung des Elektrodenstapels (ES) an der Ablegestelle gerichtet werden, um an den aufeinander abgestapelten Anoden-Lagen (AL) und Kathoden-Lagen (KL) zu untersuchen, mit welcher Abweichung (u1, u2) in der x- oder y-Richtung gegenüber den übrigen der Anoden- bzw. Kathoden-Lagen (AL, KL) des Elektrodenstapels (ES) jede einzelne Lage in Längs- oder Querrichtung der Lagen über- oder untersteht, oder zu untersuchen, mit welcher Abweichung in der z-Richtung die verschiedenen Anoden- oder Kathoden-Lagen (AL, KL) Stufen im Elektrodenstapel bilden.

2. Das Inspektionsverfahren nach Anspruch 1, bei dem
- eine Position einer abgestapelten Anoden- oder Kathoden-Lage (AL, KL) im Verhältnis zu den übrigen Lagen des Elektrodenstapels (ES) bestimmt wird, indem nach dem Ablegen der Anoden oder Kathoden-Lagen (AL, KL) auf dem Elektrodenstapel (ES) ein Versatz der einzelnen der Anoden- oder Kathoden-Lagen (AL, KL) zueinander überprüft wird, und/oder wobei
- ein Versatz der einzelnen der Anoden oder Kathoden-Lagen (AL, KL) des Elektrodenstapels (ES) zueinander mit dem Bildeinzug der dritten Kamera von wenigstens einer Kante des Elektrodenstapels (ES) ermittelt wird, und/oder wobei
- der Bildeinzug durch Ecken- oder Kantensuche dahingehend überprüft wird, ob eine oder mehrere der Anoden- oder Kathoden-Lagen (AL, KL) des Elektrodenstapels (ES) gegenüber den übrigen Anoden- oder Kathoden-Lagen (AL, KL) über- oder unterstehen.

3. Das Inspektionsverfahren nach Anspruch 1 oder 2, bei dem
- im Wechsel aufeinander abgestapelte Anoden-Lagen (AL) und Kathoden-Lagen (KL) des Elektrodenstapels (ES) unterschiedliche Abmessungen mit einer in der Seitenansicht in z-Richtung gestuften Kante aufweisen, wobei die aufeinander abgestapelten Anoden-Lagen (AL) und Kathoden-Lagen (KL) auf ihre Gestalt oder Abmessungen untersucht werden; und/oder wobei
- an den aufeinander abgestapelten Anoden-Lagen (AL) und Kathoden-Lagen (KL) untersucht wird, mit welcher Abweichung gegenüber den übrigen der Anoden- oder Kathoden-Lagen (AL, KL) des Elektrodenstapels (ES) jede einzelne Lage über- oder untersteht; und/oder wobei
- untersucht wird, mit welcher Abweichung in der z-Richtung die verschiedenen Anoden- oder Kathoden-Lagen (AL, KL) Stufen im Elektrodenstapel bilden.

4. Das Inspektionsverfahren nach Anspruch 1, bei dem
- zur Beleuchtung der jeweiligen Kante des Elektrodenstapels Punktstrahler (330) verwendet werden, um die gewünschte Position auszuleuchten.

5. Das Inspektionsverfahren nach einem der vorhergehenden Ansprüche, bei dem
- vier dritte Kameras auf die von oben gesehenen vier Ecken des Elektrodenstapels an der Ablegestelle gerichtet werden, um eine Position der obersten abgestapelten Anoden- oder Kathoden-Lage (AL, KL) im Verhältnis zu wenigstens einer darunter liegenden Lage des Elektrodenstapels (ES) zu bestimmen, indem nach dem Ablegen der Anoden- oder Kathoden-Lagen (AL, KL) auf dem Elektrodenstapel (ES) die Position der einzelnen der Anoden-/Kathoden-Lagen (AL, KL) mittels eines Bildeinzugs von jeder der vier Kameras zueinander überprüft wird,.

6. Das Inspektionsverfahren nach einem der Ansprüche 2 bis 5, weiter umfassend
- Bewegungen einer Hubvorrichtung (135) mit einem jeweiligen Werkstückträger (120) längs der z-Richtung und deren Ungenauigkeiten berücksichtigt werden, indem x-, y- Positionen des Werkstückträgers bei verschiedenen z-Höhen mit den dritten Kameras (320) erfasst werden, bevor das Ablegen der Anoden- oder Kathoden-Lagen (Al, KL) zum Bilden des Elektrodenstapels (ES) beginnt, und die entsprechenden Daten gespeichert werden zum Vergleich mit x-, y- Positionen des Werkstückträgers bei verschiedenen z-Höhen während des Ablegens der Anoden- oder Kathoden-Lagen, um zu überprüfen, ob die Anoden- oder Kathoden-Lagen innerhalb der Genauigkeit an der x-, y- Position abgestapelt wurden, die der jeweiligen z-Position des Werkstückträgers auf der Hubvorrichtung entspricht, und/oder zum Auskorrigieren der Orientierung in der Drehrichtung um eine z-Achse beim Aufnehmen der Anoden- oder Kathoden-Lagen mit der Stapelvorrichtung.

7. Das Inspektionsverfahren nach einem der vorhergehenden Ansprüche, bei dem mehrere vereinzelte Anoden-Lagen (AL) und mehrere vereinzelte Kathoden-Lagen (KL) entsprechend der Anzahl der Stapeleinheiten (130) im Stapelbereich (134) gruppenweise an Aufnehmstellen (221, 321) bereitgestellt werden.

8. Eine Vorrichtung zum Fördern und Inspizieren von Modulen oder Vorstufen von Modulen mit
- einer Aufnehmstelle (221, 321) zum Bereitstellen einer vereinzelten Anoden- oder Kathoden-Lage (AL, KL);
- einer Stapelvorrichtung (138), bestimmt und eingerichtet zum
-- Transportieren der Anoden- oder Kathoden-Lage (AL, KL) in einer x-Richtung zu einer Stapelstelle (133), wobei die x-Richtung quer zu einer y-Richtung verläuft, und
-- Abstapeln der transportierten Anoden- oder Kathoden-Lage (AL, KL) in einer z-Richtung an der Stapelstelle (133), wobei die z-Richtung quer zur x-Richtung und quer zur y-Richtung verläuft;
- wenigstens zwei dritten Kameras (320), bestimmt und eingerichtet zum Erfassen eines Bildeinzugs jeweils einer Kante (k1, k2) in der z-Richtung eines um die abgestapelte Anoden- oder Kathoden-Lage (AL, KL) an der Stapelstelle (133) angewachsenen Elektrodenstapels (ES) an der Stapelstelle (133); und
- einer Steuereinheit (ECU), die dazu bestimmt und eingerichtet ist, aus dem Bildeinzug der dritten Kamera die Ausrichtung der abgestapelten Anoden- oder Kathoden-Lage (AL, KL) relativ zum übrigen an der Stapelstelle (133) angewachsenen Elektrodenstapel (ES) zu ermitteln;
wobei die Vorrichtung **dadurch gekennzeichnet ist, dass**
die Steuereinheit (ECU) dazu bestimmt und eingerichtet ist, von den wenigstens zwei dritten Kameras (320) Bildeinzüge zu empfangen, die von oben gesehen diagonal gegenüberliegende Kanten (k1, k2) in der z-Richtung des Elektrodenstapels (ES) an der Ablegestelle enthalten, um an den aufeinander abgestapelten Anoden-Lagen (AL) und Kathoden-Lagen (KL) zu untersuchen, mit welcher Abweichung (u1, u2) in der x- oder y-Richtung gegenüber den übrigen der Anoden- oder Kathoden-Lagen (AL, KL) des Elektrodenstapels (ES) jede einzelne Lage in Längs- und Querrichtung der Lagen über- oder untersteht, oder zu untersuchen, mit welcher Abweichung in der z-Richtung die verschiedenen Anoden- oder Kathoden-Lagen (AL, KL) Stufen im Elektrodenstapel bilden.

9. Die Vorrichtung nach Anspruch 10, wobei
- die Steuereinheit (ECU) dazu bestimmt und eingerichtet ist, eine Position einer abgestapelten Anoden- oder Kathoden-Lage (AL, KL) im Verhältnis zu den übrigen Lagen des Elektrodenstapels (ES) zu bestimmen, indem nach dem Ablegen der Anoden- oder Kathoden-Lagen (AL, KL) auf dem Elektrodenstapel (ES) ein Versatz der einzelnen der Anoden- oder Kathoden-Lagen (AL, KL) zueinander überprüft wird; und/oder wobei
- die Steuereinheit (ECU) dazu bestimmt und eingerichtet ist, einen Versatz der einzelnen der Anoden- oder Kathoden-Lagen (AL, KL) zueinander mit dem Bildeinzug der dritten Kamera von wenigstens einer Kante des Elektrodenstapels (ES) zu ermitteln; und/oder wobei
- die Steuereinheit (ECU) dazu bestimmt und eingerichtet ist, den erhaltenen Bildeinzug durch Ecken- oder Kantensuche dahingehend zu überprüfen, ob eine oder mehrere der Anoden- oder Kathoden-Lagen (AL, KL) des Elektrodenstapels (ES) gegenüber den übrigen Anoden- oder Kathoden-Lagen (AL, KL) über- oder unterstehen.

10. Die Vorrichtung nach Anspruch 8 oder 9, wobei
- die Steuereinheit (ECU) dazu bestimmt und eingerichtet ist, aus dem Bildeinzug im Wechsel aufeinander abgestapelter Anoden-Lagen (AL) und Kathoden-Lagen (KL) des Elektrodenstapels (ES) unterschiedliche Abmessungen mit einer in der Seitenansicht in z-Richtung gestuften Kante zu ermitteln, und die aufeinander abgestapelten Anoden-Lagen (AL) und Kathoden-Lagen (KL) auf ihre Gestalt oder Abmessungen hin zu untersuchen; und/oder wobei
- die Steuereinheit (ECU) dazu bestimmt und eingerichtet ist, an den aufeinander abgestapelten Anoden-Lagen (AL) und Kathoden-Lagen (KL) zu untersuchen, mit welcher Abweichung gegenüber den übrigen der Anoden- oder Kathoden-Lagen (AL, KL) des Elektrodenstapels (ES) jede einzelne Lage über- oder untersteht; und/oder
- die Steuereinheit (ECU) dazu bestimmt und eingerichtet ist, den Bildeinzug daraufhin zu untersuchen, mit welcher Abweichung in der z-Richtung die verschiedenen Anoden- oder Kathoden-Lagen (AL, KL) Stufen im Elektrodenstapel bilden.

11. Die Vorrichtung nach einem der vorhergehenden Vorrichtungsansprüche, wobei
- zur Beleuchtung der jeweiligen Kante des Elektrodenstapels Punktstrahler (330) die gewünschte Position an dem Elektrodenstapel (ES) ausleuchten.

12. Die Vorrichtung nach einem der vorhergehenden Vorrichtungsansprüche, wobei
- die Steuereinheit (ECU) dazu bestimmt und eingerichtet ist, von wenigstens vier dritten Kameras (320) Bildeinzüge zu empfangen, welche die von oben gesehenen vier Ecken des Elektrodenstapels an der Ablegestelle enthalten, um eine Position der obersten abgestapelten Anoden- oder Kathoden-Lage (AL, KL) im Verhältnis zu wenigstens einer darunter liegenden Lage des Elektrodenstapels (ES) zu bestimmen, indem nach dem Ablegen der Anoden- oder Kahthoden-Lagen (AL, KL) auf dem Elektrodenstapel (ES) ein Versatz der einzelnen der Anoden-/Kathoden-Lagen (AL, KL) zueinander überprüft wird, mittels eines Bildeinzugs von jeder der vier Kameras.

13. Die Vorrichtung nach einem der vorhergehenden Vorrichtungsansprüche, wobei
- die Steuereinheit (ECU) dazu bestimmt und eingerichtet ist, Bewegungen einer Hubvorrichtung (135) mit einem jeweiligen Werkstückträger (120) längs der z-Richtung und deren Ungenauigkeiten zu berücksichtigen, indem vor dem Beginn des Ablegens der Anoden- oder Kathoden-Lagen (Al, KL) zum Bilden des Elektrodenstapels (ES) die x-, y- Positionen des Werkstückträgers bei verschiedenen z-Höhen mit den dritten Kameras (320) mittels Bildeinzügen erfasst werden, die entsprechenden Daten in einem Datenspeicher gespeichert werden zum Vergleich mit x-, y- Positionen des Werkstückträgers bei verschiedenen z-Höhen während des Ablegens der Anoden- oder Kathoden-Lagen, um zu überprüfen, ob die Anoden- oder Kathoden-Lagen innerhalb der Genauigkeit an der x-, y- Position abgestapelt wurden, die der jeweiligen z-Position des Werkstückträgers auf der Hubvorrichtung entspricht, und/oder zum Auskorrigieren der Orientierung in der Drehrichtung um eine z-Achse beim Aufnehmen der Anoden-/Kathoden-Lagen mit der Stapelvorrichtung.

14. Die Vorrichtung nach einem der vorhergehenden Vorrichtungsansprüche, wobei
- jeweils eine Transportstrecke (210, 310) mit Unterdruck- oder Haft-Tabletts (212, 312) dazu bestimmt und eingerichtet ist, mehrere vereinzelte Anoden-Lagen (AL) und mehrere vereinzelte Kathoden-Lagen (KL) entsprechend der Anzahl der Stapeleinheiten (130) im Stapelbereich (134) an Aufnehmstellen (221, 321) gruppenweise bereitzustellen.

## Claims

1. An inspection process in the manufacture of modules or precursors of modules comprises the steps:
- providing a singled anode or cathode layer (AL, KL);
- transporting the anode or cathode layer (AL, KL) in an x-direction to a stacking location (133) by a stacking apparatus (138), wherein the x-direction runs transversely to a y-direction;
- stacking the transported anode or cathode layer (AL, KL) in a z-direction at the stacking point (133), the z-direction being transverse to the x-direction and transverse to the y-direction;
- detecting an edge (k1, k2) in the z-direction of an electrode stack (ES) grown around the stacked anode or cathode layer (AL, KL) at the stacking location (133) with an image feed of a third camera (320); and
- checking the alignment of the stacked anode or cathode layer (AL, KL) relative to the rest of the electrode stack (ES) grown at the stacking point (133);
wherein the inspection method is **characterised in that**
at least two third cameras (320) are directed from the side onto diagonally opposite edges (k1, k2) in the z-direction of the electrode stack (ES) at the deposit location, as viewed from above, in order to examine on the stacked anode layers (AL) and cathode layers (KL) with what deviation (u1, u2) in the x- or y-direction relative to the rest of the anode or cathode layers (AL, KL) of the electrode stack (ES) each individual layer projects above or below in the longitudinal or transverse direction of the layers, or to examine with what deviation in the z-direction the cathode layers (AL, KL) of the electrode stack (ES) in the longitudinal or transverse direction of the layers, or to investigate the deviation in the z-direction with which the various anode or cathode layers (AL, KL) form steps in the electrode stack.

2. The inspection method according to claim 1, in which
- a position of a stacked anode or cathode layer (AL, KL) is determined in relation to the other layers of the electrode stack (ES) by checking an offset of the individual anode or cathode layers (AL, KL) relative to one another after the anodes or cathode layers (AL, KL) have been placed on the electrode stack (ES), and/or wherein
- an offset of the individual anodes or cathode layers (AL, KL) of the electrode stack (ES) relative to one another is determined with the image capture of the third camera from at least one edge of the electrode stack (ES), and/or wherein
- the image indentation is checked by corner or edge search to determine whether one or more of the anode or cathode layers (AL, KL) of the electrode stack (ES) are above or below the other anode or cathode layers (AL, KL).

3. The inspection method according to claim 1 or 2, in which
- alternately stacked anode layers (AL) and cathode layers (KL) of the electrode stack (ES) have different dimensions with an edge stepped in the z-direction in the side view, wherein the stacked anode layers (AL) and cathode layers (KL) are inspected for their shape or dimensions; and/or wherein
- the anode layers (AL) and cathode layers (KL) stacked on top of one another are analysed to determine the deviation with which each individual layer is above or below the other of the anode or cathode layers (AL, KL) of the electrode stack (ES); and/or wherein
- the deviation in the z-direction with which the different anode or cathode layers (AL, KL) form steps in the electrode stack is analysed.

4. The inspection method according to claim 1, in which
- spotlights (330) can be used to illuminate the respective edge of the electrode stack in order to illuminate the desired position.

5. The inspection method according to one of the preceding claims, in which
- four third cameras are directed at the four corners of the electrode stack at the deposit location, as seen from above, in order to determine a position of the uppermost stacked anode or cathode layer (AL, KL) in relation to at least one layer of the electrode stack (ES) lying below it, by checking the position of each of the anode/cathode layers (AL, KL) relative to each other by means of an image feed from each of the four cameras after the anode or cathode layers (AL, KL) have been deposited on the electrode stack (ES).

6. The inspection method according to any one of claims 2 to 5, further comprising
- movements of a lifting apparatus (135) with a respective workpiece carrier (120) along the z-direction and their inaccuracies are taken into account by detecting x-, y-positions of the workpiece carrier at different z-heights with the third cameras (320) before the deposition of the anode or cathode layers (Al, KL) to form the electrode stack (ES) starts, and the corresponding data are stored for comparison with x-, y-positions of the workpiece carrier at different z-heights during the depositing of the anode or cathode layers in order to check whether the anode or cathode layers have been stacked within the accuracy at the x-, y- position corresponding to the respective z-position of the workpiece carrier on the lifting apparatus, and/or for correcting the orientation in the direction of rotation about a z-axis when picking up the anode or cathode layers with the stacking apparatus.

7. The inspection method according to any of the preceding claims, wherein a plurality of singled anode layers (AL) and a plurality of singled cathode layers (KL) corresponding to the number of stacking units (130) in the stacking area (134) are provided in groups at pick-up locations (221, 321).

8. An apparatus for conveying and inspecting modules or precursors of modules with
- a pick-up point (221, 321) for providing a single anode or cathode layer (AL, KL);
- a stacking apparatus (138), intended and arranged for
-- transporting the anode or cathode layer (AL, KL) in an x-direction to a stacking location (133), wherein the x-direction is transverse to a y-direction, and
-- stacking the transported anode or cathode layer (AL, KL) in a z-direction at the stacking point (133), wherein the z-direction runs transverse to the x-direction and transverse to the y-direction;
- at least two third cameras (320), intended and arranged for capturing an image indentation of an edge (k1, k2) in the z direction of an electrode stack (ES) grown around the stacked anode or cathode layer (AL, KL) at the stacking location (133); and
- a control unit (ECU) which is intended and arranged to determine the orientation of the stacked anode or cathode layer (AL, KL) relative to the remaining electrode stack (ES) grown at the stacking location (133) from the image capture of the third camera;
wherein the apparatus is **characterised in that**
the control unit (ECU) is intended and arranged to receive from the at least two third cameras (320) image captures which contain diagonally opposite edges (k1, k2) in the z-direction of the electrode stack (ES) at the deposit location, as seen from above, in order to examine the anode layers (AL) and cathode layers (KL) stacked on top of one another, with what deviation (u1, u2) in the x- or y-direction relative to the other anode or cathode layers (AL, KL) of the electrode stack (ES) each individual layer is above or below in the longitudinal and transverse direction of the layers, or to investigate with what deviation in the z-direction the various anode or cathode layers (AL, KL) form steps in the electrode stack.

9. The apparatus according to claim 10, wherein
- the control unit (ECU) is intended and arranged to determine a position of a stacked anode or cathode layer (AL, KL) in relation to the other layers of the electrode stack (ES) by checking an offset of the individual anode or cathode layers (AL, KL) with respect to one another after the anode or cathode layers (AL, KL) have been deposited on the electrode stack (ES); and/or wherein
- the control unit (ECU) is intended and arranged to determine an offset of the individual anode or cathode layers (AL, KL) relative to one another with the image capture of the third camera from at least one edge of the electrode stack (ES); and/or wherein
- the control unit (ECU) is intended and arranged to check the image indentation obtained by corner or edge search to determine whether one or more of the anode or cathode layers (AL, KL) of the electrode stack (ES) protrude or are inferior to the other anode or cathode layers (AL, KL).

10. The apparatus according to claim 8 or 9, wherein
- the control unit (ECU) is intended and arranged to determine different dimensions with an edge stepped in the z-direction in the side view from the image indentation in alternation of anode layers (AL) and cathode layers (KL) stacked on top of one another of the electrode stack (ES), and to examine the shape or dimensions of the anode layers (AL) and cathode layers (KL) stacked on top of one another; and/or wherein
- the control unit (ECU) is intended and arranged to examine the stacked anode layers (AL) and cathode layers (KL) to determine the deviation from the remaining anode or cathode layers (AL, KL) of the electrode stack (ES) with which each individual layer is above or below; and/or
- the control unit (ECU) is intended and arranged to analyse the image feed to determine the deviation in the z-direction with which the various anode or cathode layers (AL, KL) form steps in the electrode stack.

11. The apparatus according to any one of the preceding apparatus claims, wherein
- to illuminate the respective edge of the electrode stack, spotlights (330) illuminate the desired position on the electrode stack (ES).

12. The apparatus according to one of the preceding apparatus claims, wherein
- the control unit (ECU) is intended and arranged to receive image feeds from at least four third cameras (320), which contain the four corners of the electrode stack at the deposit location, as viewed from above, in order to determine a position of the uppermost stacked anode or cathode layer (AL, KL) in relation to at least one underlying layer of the electrode stack (ES) by checking an offset of the individual anode/cathode layers (AL, KL) relative to one another after the anode or cathode layers (AL, KL) have been deposited on the electrode stack (ES), by means of an image capture from each of the four cameras.

13. The apparatus according to one of the preceding apparatus claims, wherein
- the control unit (ECU) is intended and arranged to take into account movements of a lifting apparatus (135) with a respective workpiece carrier (120) along the z-direction and inaccuracies thereof, in that before the start of depositing the anode or cathode layers (Al, KL) for forming the electrode stack (ES), the x-, y- positions of the workpiece carrier at different z-heights are detected with the third cameras (320) by means of image feeds, the corresponding data are stored in a data memory for comparison with x-, y- positions of the workpiece carrier at different z-heights during the depositing of the anode or cathode layers in order to check whether the anode or cathode layers have been stacked within the accuracy at the x-, y- position which corresponds to the respective z-position of the workpiece carrier on the lifting apparatus, and/or for correcting the orientation in the direction of rotation about a z-axis when picking up the anode/cathode layers with the stacking apparatus.

14. The apparatus according to any one of the preceding apparatus claims, wherein
- in each case a transport section (210, 310) with vacuum or adhesive trays (212, 312) is intended and arranged to provide a plurality of individual anode layers (AL) and a plurality of individual cathode layers (KL) corresponding to the number of stacking units (130) in the stacking area (134) at pick-up points (221, 321) in groups.

## Revendications

1. Une méthode d'inspection dans la fabrication de modules ou de précurseurs de modules, comprenant les étapes suivantes:
- une mise à disposition d'une couche d'anodes ou de cathodes séparées (AL, KL);
- un transport de la couche d'anodes ou de cathodes (AL, KL) dans une direction x vers un emplacement d'empilage (133) à l'aide d'un dispositif d'empilage (138), la direction x étant perpendiculaire à une direction y;
- un dépilage de la couche d'anodes ou de cathodes transportée (AL, KL) dans une direction z au niveau du point d'empilage (133), la direction z étant transversale à la direction x et à la direction y;
- une détection d'un bord (k1, k2) dans la direction z d'une pile d'électrodes (ES) formée autour de la couche d'anodes ou de cathodes (AL, KL) empilée au niveau du point d'empilage (133) au niveau du point d'empilage (133) à l'aide d'une caméra (320); et
- une vérification de l'alignement de la couche d'anodes ou de cathodes (AL, KL) empilée par rapport au reste de la pile d'électrodes (ES) empilée au point d'empilage (133);
la méthode d'inspection étant **caractérisé en ce que**
au moins deux troisièmes caméras (320) sont orientées depuis le côté vers des bords diagonalement opposés (k1, k2) vus depuis le haut dans la direction z de la pile d'électrodes (ES) au niveau du point de dépose, afin d'examiner, sur les couches d'anodes (AL) et les couches de cathodes (KL) empilées les unes sur les autres, avec quel écart (u1, u2) dans la direction x ou y par rapport aux autres couches d'anodes ou de cathodes (AL, KL) de la pile d'électrodes (ES) chaque couche individuelle dépasse ou est en retrait dans le sens longitudinal ou transversal des couches, ou pour examiner avec quel écart dans la direction z les différentes couches d'anodes ou de cathodes (AL, KL) forment des gradins dans la pile d'électrodes.

2. La méthode d'inspection selon la revendication 1, dans lequel
- une position d'une couche d'anodes ou de cathodes empilée (AL, KL) est déterminée par rapport aux autres couches de la pile d'électrodes (ES) en vérifiant, après le dépôt des couches d'anodes ou de cathodes (AL, KL) sur la pile d'électrodes (ES), un décalage des différentes couches d'anodes ou de cathodes (AL, KL) les unes par rapport aux autres, et/ou dans laquelle
- un décalage des différentes couches d'anodes ou de cathodes (AL, KL) de la pile d'électrodes (ES) les unes par rapport aux autres est déterminé à l'aide de la capture d'image de la troisième caméra d'au moins un bord de la pile d'électrodes (ES), et/ou dans lequel
- la capture d'image est vérifiée par recherche d'angles ou de bords afin de déterminer si une ou plusieurs des couches d'anodes ou de cathodes (AL, KL) de la pile d'électrodes (ES) dépassent ou ne dépassent pas par rapport aux autres couches d'anodes ou de cathodes (AL, KL).

3. La méthode d'inspection selon la revendication 1 ou 2, dans laquelle
- les couches d'anodes (AL) et les couches de cathodes (KL) empilées en alternance de la pile d'électrodes (ES) présentent des dimensions différentes avec un bord étagé dans la direction z en vue latérale, les couches d'anodes (AL) et les couches de cathodes (KL) empilées les unes sur les autres étant examinées quant à leur forme ou leurs dimensions; et/ou
- les couches d'anodes (AL) et les couches de cathodes (KL) empilées les unes sur les autres sont examinées afin de déterminer l'écart de chaque couche par rapport aux autres couches d'anodes ou de cathodes (AL, KL) de la pile d'électrodes (ES) ; et/ou
- on examine avec quel écart dans la direction z les différentes couches d'anodes ou de cathodes (AL, KL) forment des gradins dans la pile d'électrodes.

4. La méthode d'inspection selon la revendication 1, dans laquelle
- des projecteurs ponctuels (330) sont utilisés pour éclairer le bord respectif de la pile d'électrodes afin d'éclairer la position souhaitée.

5. La méthode d'inspection selon l'une des revendications précédentes, dans laquelle
- quatre troisièmes caméras sont dirigées vers les quatre coins de la pile d'électrodes, vus d'en haut, au point de dépose, afin de déterminer la position de la couche d'anodes ou de cathodes (AL, KL) supérieure empilée par rapport à au moins une couche sous-jacente de la pile d'électrodes (ES), en vérifiant, après la dépose des couches d'anodes ou de cathodes (AL, KL) sur la pile d'électrodes (ES), la position de chacune des couches d'anodes/cathodes (AL, KL) est vérifiée les unes par rapport aux autres à l'aide d'une image capturée par chacune des quatre caméras.

6. La méthode d'inspection selon l'une des revendications 2 à 5, comprenant en outre
- des mouvements d'un dispositif de levage (135) avec un porte-pièce respectif (120) le long de la direction z et leurs imprécisions sont prises en compte en enregistrant les positions x, y du porte-pièce à différentes hauteurs z à l'aide des troisièmes caméras d' s (320) avant de commencer la dépose des couches d'anodes ou de cathodes (AI, KL) pour former la pile d'électrodes (ES) et en enregistrant les données correspondantes pour les comparer aux positions x, y du porte-pièce à différentes hauteurs z pendant le dépôt des couches d'anode ou cathodiques, afin de vérifier si les couches d'anodes ou de cathodes ont été empilées avec une précision au niveau des positions x, y qui correspond à la position z respective du porte-pièce sur le dispositif de levage, et/ou afin de corriger l'orientation dans le sens de rotation autour d'un axe z lors de la prise des couches d'anodes ou de cathodes à l'aide du dispositif d'empilage.

7. La méthode d'inspection selon l'une des revendications précédentes, dans laquelle plusieurs couches d'anodes (AL) séparées et plusieurs couches de cathodes (KL) séparées sont mises à disposition par groupes à des points de prélèvement (221, 321) en fonction du nombre d'unités d'empilage (130) dans la zone d'empilage (134).

8. Un dispositif pour transporter et inspecter des modules ou des précurseurs de modules, comprenant
- un emplacement de réception (221, 321) pour fournir une couche d'anode ou de cathode séparée (AL, KL);
- un dispositif d'empilage (138) destiné et conçu pour
-- transporter la couche d'anodes ou de cathodes (AL, KL) dans une direction x vers un emplacement d'empilage (133), la direction x étant transversale à une direction y, et
-- déempiler la couche d'anodes ou de cathodes transportée (AL, KL) dans une direction z au niveau du poste d'empilage (133), la direction z étant transversale à la direction x et à la direction y;
- au moins deux troisièmes caméras (320), destinées et conçues pour enregistrer une image d'un bord (k1, k2) dans la direction z d'une pile d'électrodes (ES) formée autour de la couche d'anodes ou de cathodes (AL, KL) empilée à l'emplacement d'empilage (133) à l'emplacement d'empilage (133); et
- une unité de commande (ECU) qui est conçue et agencée pour déterminer, à partir de l'image capturée par la troisième caméra, l'orientation de la couche d'anodes ou de cathodes (AL, KL) empilée par rapport au reste de la pile d'électrodes (ES) empilée au niveau du poste d'empilage (133);
le dispositif étant **caractérisé en ce que**
l'unité de commande (ECU) est conçue et configurée pour recevoir, à partir d'au moins deux troisièmes caméras (320) qui, vues de dessus, comportent des bords diagonalement opposés (k1, k2) dans la direction z de la pile d'électrodes (ES) au niveau du point de dépôt, afin d'examiner, sur les couches d'anodes et de cathodes (KL) empilées les unes sur les autres, avec quel écart (u1, u2) dans la direction x ou y par rapport aux autres couches d'anodes ou de cathodes (AL, KL) de la pile d'électrodes (ES) chaque couche individuelle dépasse ou est en retrait dans le sens longitudinal et transversal des couches, ou pour examiner avec quel écart dans la direction z les différentes couches d'anodes ou de cathodes (AL, KL) forment des gradins dans la pile d'électrodes.

9. Le dispositif selon la revendication 10, dans lequel
- l'unité de commande (ECU) est conçue et agencée pour déterminer la position d'une couche d'anodes ou de cathodes empilée (AL, KL) par rapport aux autres couches de la pile d'électrodes (ES) en vérifiant, après le dépôt des couches d'anodes ou de cathodes (AL, KL) sur la pile d'électrodes (ES), un décalage des différentes couches d'anodes ou de cathodes (AL, KL) les unes par rapport aux autres ; et/ou dans lequel
- l'unité de commande (ECU) est conçue et agencée pour déterminer un décalage des différentes couches d'anodes ou de cathodes (AL, KL) les unes par rapport aux autres à l'aide de l'image capturée par la troisième caméra d'au moins un bord de la pile d'électrodes (ES) ; et/ou dans lequel
- l'unité de commande (ECU) est conçue et agencée pour vérifier l'image obtenue par recherche d'angles ou de bords afin de déterminer si une ou plusieurs des couches d'anodes ou de cathodes (AL, KL) de la pile d'électrodes (ES) dépassent ou sont en retrait par rapport aux autres couches d'anodes ou de cathodes (AL, KL).

10. Le dispositif selon la revendication 8 ou 9, dans lequel
- l'unité de commande (ECU) est conçue et agencée pour déterminer, à partir de l'image obtenue à partir des couches d'anodes (AL) et de couches de cathodes (KL) empilées en alternance de la pile d'électrodes (ES), différentes dimensions avec un bord étagé dans la direction z en vue latérale, et d'examiner la forme ou les dimensions des couches d'anodes (AL) et des couches de cathodes (KL) empilées les unes sur les autres; et/ou dans lequel
- l'unité de commande (ECU) est conçue et agencée pour examiner, sur les couches d'anodes (AL) et les couches de cathodes (KL) empilées les unes sur les autres, de combien chaque couche dépasse ou est en retrait par rapport aux autres couches d'anodes ou de cathodes (AL, KL) de la pile d'électrodes (ES); et/ou
- l'unité de commande (ECU) est conçue et agencée pour examiner l'entrée d'image afin de déterminer l'écart dans la direction z avec lequel les différentes couches d'anodes ou de cathodes (AL, KL) forment des gradins dans la pile d'électrodes.

11. Le dispositif selon l'une des revendications précédentes, dans lequel
- pour éclairer le bord respectif de la pile d'électrodes, des projecteurs ponctuels (330) éclairent la position souhaitée sur la pile d'électrodes (ES).

12. Le dispositif selon l'une des revendications précédentes, dans lequel
- l'unité de commande (ECU) est conçue et agencée pour recevoir des images provenant d'au moins quatre troisièmes caméras (320) qui contiennent les quatre coins de la pile d'électrodes vus de dessus au point de dépôt, afin de déterminer une position de la couche d'anodes ou de cathodes (AL, KL) par rapport à au moins une couche sous-jacente de la pile d'électrodes (ES), en vérifiant, après le dépôt des couches d'anodes ou de cathodes (AL, KL) sur la pile d'électrodes (ES), un décalage des différentes couches d'anodes/cathodes (AL, KL) les unes par rapport aux autres, à l'aide d'une image provenant de chacune des quatre caméras.

13. Le dispositif selon l'une des revendications précédentes, dans lequel
- l'unité de commande (ECU) est conçue et configurée pour prendre en compte les mouvements d'un dispositif de levage (135) avec un porte-pièce respectif (120) le long de la direction z et leurs imprécisions, en déterminant, avant le début du dépôt des couches d'anode ou de cathode (AI, KL) pour former la pile d'électrodes (ES), les positions x, y du porte-pièce à différentes hauteurs z sont enregistrées à l'aide des troisièmes caméras (320) au moyen d'images, les données correspondantes sont enregistrées dans une mémoire de données pour être comparées aux positions x, y du porte-pièce à différentes hauteurs z pendant le dépôt des couches d'anodeou cathodiques, afin de vérifier si les couches d'anodes ou de cathodes ont été empilées avec une précision au niveau des positions x, y qui correspond à la position z respective du porte-pièce sur le dispositif de levage, et/ou afin de corriger l'orientation dans le sens de rotation autour d'un axe z lors de la prise des couches d'anodes/cathodes à l'aide du dispositif d'empilage.

14. Le dispositif selon l'une des revendications précédentes, dans lequel
- une voie de transport (210, 310) avec des plateaux à dépression ou à adhérence (212, 312) est destinée et conçue pour fournir plusieurs couches d'anodes (AL) séparées et plusieurs couches de cathodes (KL) séparées en fonction du nombre d'unités d'empilage (130) dans la zone d'empilage (134) à des emplacements de réception (221, 321).
